# EUROPEAN PATENT APPLICATION

(11) **EP 3 364 583 A1**
(43) Date of publication of application: **22.08.2018**
(21) Application number: 15907699.1
(22) Date of filing: 07.12.2015
(51) Int. Cl.: H04L 1/18

(54) **INFORMATION TRANSMISSION METHOD, TERMINAL AND BASE STATION**

(30) Priority: 06.11.2015 WO PCT/CN2015/094059; 27.11.2015 WO PCT/CN2015/095839
(71) Applicant: Huawei Technologies Co., Ltd., Longgang District Shenzhen, Guangdong 518129 (CN)
(72) Inventor: WANG, Yi, Shenzhen Guangdong 518129 (CN); ZHANG, Xiangdong, Shenzhen Guangdong 518129 (CN); CLASSON, Brian, Shenzhen Guangdong 518129 (CN)
(74) Representative: Gill Jennings & Every LLP
(86) International application number: PCT/CN2015/096559
(87) International publication number: WO 2017/075857

(57) **Abstract**

The present invention discloses an information transmission method, a terminal, and a base station. The method includes: receiving, by a machine type communication MTC terminal, downlink control information from a base station, where the downlink control information includes identification information of a HARQ process and uplink index field information, the uplink index field information occupies two bits, and the two bits include a first bit and a second bit; and determining, according to a subframe location n at which the downlink control information is transmitted, the identification information of the HARQ process, and the uplink index field information, a first start subframe location and a second start subframe location for transmitting uplink data corresponding to the HARQ process. TTI bundling in an MTC scenario can be implemented by using the method.

## Description

### TECHNICAL FIELD

The present invention relates to the communications field, and more specifically, to an information transmission method, a terminal, and a base station.

### BACKGROUND

The Internet of Things is a network in which various devices having specific capabilities of awareness, computing, execution, and communication are deployed to obtain information from a physical world, and a network is used to implement information transmission, coordination, and processing, so as to implement interconnection between people and things or between things. In brief, the Internet of Things is intended for interconnection and interworking between people and things and between things. The Internet of Things may be applied to various fields such as a smart grid, intelligent agriculture, intelligent transportation, and environment monitoring.

Machine-to-machine (Machine to Machine, M2M), that is, machine-to-machine communication mainly studies how to carry an Internet of Things application on a mobile communications network. A communications service carried by the mobile communications network is referred to as machine type communication (Machine Type Communication, MTC). The mobile communications network needs to be optimized or enhanced so that an MTC device can be introduced. In terms of cost reduction of the MTC device, working bandwidth of the device can be reduced. For example, the working bandwidth of the device is limited to 1.4 MHz. In terms of coverage enhancement (coverage enhancement, CE), coverage enhancement support is provided for an MTC device with a relatively large path loss that is, for example, in a basement, so that the device can access the network to obtain a service. Signal repetition is one of methods for implementing coverage enhancement. However, MTC devices in different environments have different coverage enhancement requirements. If a coverage enhancement requirement is defined as a coverage enhancement level (CE level), MTC devices in different environments have different coverage enhancement levels. Likewise, signal repetition is used as an example. MTC devices at different coverage enhancement levels need to perform different quantities of signal repetitions.

The working bandwidth of the MTC device is relatively narrow. Therefore, when system bandwidth is greater than the working bandwidth supported by the MTC device, conventional control channels such as a physical downlink control channel (Physical Downlink Control Channel, PDCCH) and a physical hybrid automatic repeat request indicator channel (Physical Hybrid ARQ Indicator Channel, PHICH) may be unable to be received by the MTC device. In this case, if scheduling is performed based on a control channel, the MTC device may transmit uplink/downlink data or a physical uplink/downlink shared channel (Physical Uplink/Downlink Shared Channel, PU/DSCH) by using a control channel used for scheduling the MTC device. A new design solution is required for determining a PUSCH transmission status (that is, transmission state feedback), acknowledgement (acknowledgement, ACK)/negative acknowledgement (negative acknowledgement, NACK).

In the prior art, an ACK/NACK function is implemented by using a new data indicator (New Data Indicator, NDI) (0 or 1) in downlink control information (Downlink Control Information, DCI) on a control channel used for scheduling an MTC device.

However, in some scenarios, for example, when a quantity of uplink subframes is greater than that of downlink subframes, or scheduling of a new uplink HARQ process and transmission of feedback information of another HARQ process need to be simultaneously performed in one downlink subframe, one piece of DCI cannot be used to simultaneously schedule and feed back on a plurality of PUSCHs in a possible use scenario of an MTC terminal in an existing specification. Consequently, the terminal cannot determine an uplink transmission status.

In addition, when the MTC terminal fails to receive the DCI, because the MTC terminal cannot detect a PHICH, the terminal cannot determine a PUSCH transmission status or perform initial transmission or retransmission of PUSCH data.

### SUMMARY

Embodiments of the present invention provide an information transmission method, a terminal, and a base station, so as to determine an uplink transmission status in an MTC scenario.

According to a first aspect, an information transmission method is provided, the method is applied to machine type communication MTC, and the method includes:
sending MTC data to a base station; and
when receiving transmission state feedback information from the base station within a predetermined time, determining that a transmission status of the MTC data is a first transmission state; or when receiving no transmission state feedback information from the base station within the predetermined time, determining that a transmission status of the MTC data is a second transmission state, where
the first transmission state is one of "transmission succeeds" and "transmission fails", the second transmission state is the other one of "transmission succeeds" and "transmission fails", the transmission state feedback information is one of acknowledgement ACK information and negative acknowledgement NACK information, the ACK information indicates that transmission succeeds, and the NACK information indicates that transmission fails.

With reference to the first aspect, in a first possible implementation, the transmission state feedback information is the ACK information, the first transmission state is "transmission succeeds", and the second transmission state is "transmission fails".

With reference to the first aspect, in a second possible implementation, the transmission state feedback information is the NACK information, the first transmission state is "transmission fails", and the second transmission state is "transmission succeeds".

With reference to the second possible implementation of the first aspect, in a third possible implementation, the NACK information is included in a downlink control channel, the downlink control channel further includes retransmission scheduling information, and the retransmission scheduling information is scheduling information used to instruct to retransmit the MTC data.

With reference to any one of the first aspect, or the first to the third possible implementations of the first aspect, in a fourth possible implementation, the method further includes:
receiving timing information sent by the base station; and
determining the predetermined time according to the timing information.

With reference to the fourth possible implementation of the first aspect, in a fifth possible implementation, the receiving timing information sent by the base station includes:
receiving the timing information sent by the base station by using a downlink control channel, where the downlink control channel is an MTC physical downlink control channel.

With reference to any one of the first aspect, or the first to the third possible implementations of the first aspect, in a sixth possible implementation, the predetermined time is determined according to one or more of the following parameters:
a quantity of repetitions of the downlink control channel, a coverage enhancement level of the downlink control channel, or a coverage enhancement level of the terminal.

According to a second aspect, an information transmission method is provided, the method is applied to machine type communication MTC, and the method includes:
monitoring a transmission status of uplink MTC data of a terminal; and
sending transmission state feedback information to the terminal when the transmission status of the uplink MTC data is a first transmission state; or prohibiting sending transmission state feedback information to the terminal when the transmission status of the uplink MTC data is a second transmission state, where
the first transmission state is one of "transmission succeeds" and "transmission fails", the second transmission state is the other one of "transmission succeeds" and "transmission fails", the transmission state feedback information is one of acknowledgement ACK information and negative acknowledgement NACK information, the ACK information indicates that transmission succeeds, and the NACK information indicates that transmission fails.

With reference to the second aspect, in a first possible implementation, the transmission state feedback information is the ACK information, the first transmission state is "transmission succeeds", and the second transmission state is "transmission fails".

With reference to the second aspect, in a second possible implementation, the transmission state feedback information is the NACK information, the first transmission state is "transmission fails", and the second transmission state is "transmission succeeds".

With reference to the second possible implementation of the second aspect, in a third possible implementation, the NACK information is included in a downlink control channel, the downlink control channel further includes retransmission scheduling information, and the retransmission scheduling information is scheduling information used to instruct to retransmit the MTC data.

With reference to any one of the second aspect, or the first to the third possible implementations of the second aspect, in a fourth possible implementation, the method further includes:
sending timing information to the terminal, where
the timing information is used to determine a predetermined time, and the predetermined time is used by the terminal to determine, when no transmission state feedback information is received from the base station within the predetermined time, that the transmission status of the uplink MTC data is the second transmission state.

With reference to the fourth possible implementation of the second aspect, in a fifth possible implementation, the sending timing information to the terminal includes:
sending the timing information to the terminal by using a downlink control channel, where the downlink control channel is a machine type communication physical downlink control channel.

According to a third aspect, a terminal is provided, the terminal is applied to machine type communication MTC, and the terminal includes:
a sending module, configured to send MTC data to a base station;
a receiving module, configured to receive transmission state feedback information from the base station; and
a processing module, configured to:
   when the transmission state feedback information is received from the base station within a predetermined time, determine that a transmission status of the MTC data is a first transmission state; or when no transmission state feedback information is received from the base station within the predetermined time, determine that a transmission status of the MTC data is a second transmission state, where
   the first transmission state is one of "transmission succeeds" and "transmission fails", the second transmission state is the other one of "transmission succeeds" and "transmission fails", the transmission state feedback information is one of acknowledgement ACK information and negative acknowledgement NACK information, the ACK information indicates that transmission succeeds, and the NACK information indicates that transmission fails.

With reference to the third aspect, in a first possible implementation, the transmission state feedback information is the ACK information, the first transmission state is "transmission succeeds", and the second transmission state is "transmission fails".

With reference to the third aspect, in a second possible implementation, the transmission state feedback information is the NACK information, the first transmission state is "transmission fails", and the second transmission state is "transmission succeeds".

With reference to the second possible implementation of the third aspect, in a third possible implementation, the receiving module is specifically configured to receive the NACK information transmitted on a downlink control channel, where the downlink control channel further includes retransmission scheduling information, and the retransmission scheduling information is scheduling information used to instruct to retransmit the MTC data.

With reference to any one of the third aspect, or the first to the third possible implementations of the third aspect, in a fourth possible implementation, the receiving module is further configured to receive timing information sent by the base station; and
the processing module is further configured to determine the predetermined time according to the timing information.

With reference to the fourth possible implementation of the third aspect, in a fifth possible implementation, the receiving module is specifically configured to receive the timing information transmitted on a downlink control channel, where the downlink control channel is an MTC physical downlink control channel.

With reference to any one of the third aspect, or the first to the third possible implementations of the third aspect, in a sixth possible implementation, the processing module is further configured to determine the predetermined time according to one or more of the following parameters:
a quantity of repetitions of the downlink control channel, a coverage enhancement level of the downlink control channel, or a coverage enhancement level of the terminal.

According to a fourth aspect, a base station is provided, the base station is applied to machine type communication MTC, and the base station includes:
a processing module, configured to monitor a transmission status of uplink MTC data of a terminal; and
a sending module, configured to:
   send transmission state feedback information to the terminal when the transmission status of the uplink MTC data is a first transmission state; or prohibit sending transmission state feedback information to the terminal when the transmission status of the uplink MTC data is a second transmission state, where
   the first transmission state is one of "transmission succeeds" and "transmission fails", the second transmission state is the other one of "transmission succeeds" and "transmission fails", the transmission state feedback information is one of acknowledgement ACK information and negative acknowledgement NACK information, the ACK information indicates that transmission succeeds, and the NACK information indicates that transmission fails.

With reference to the fourth aspect, in a first possible implementation, the transmission state feedback information is the ACK information, the first transmission state is "transmission succeeds", and the second transmission state is "transmission fails".

With reference to the fourth aspect, in a second possible implementation, the transmission state feedback information is the NACK information, the first transmission state is "transmission fails", and the second transmission state is "transmission succeeds".

With reference to the second possible implementation of the fourth aspect, in a third possible implementation, the sending module is specifically configured to: send the NACK information on a downlink control channel, and transmit retransmission scheduling information on the downlink control channel, where the retransmission scheduling information is scheduling information used to instruct to retransmit the MTC data.

With reference to any one of the fourth aspect, or the first to the third possible implementations of the fourth aspect, in a fourth possible implementation, the sending module is further configured to:
send timing information to the terminal, where
the timing information is used to determine a predetermined time, and the predetermined time is used by the terminal to determine, when no transmission state feedback information is received from the base station within the predetermined time, that the transmission status of the uplink MTC data is the second transmission state.

With reference to the fourth possible implementation of the fourth aspect, in a fifth possible implementation, the sending module is specifically configured to send the timing information on a downlink control channel, where the downlink control channel is a machine type communication physical downlink control channel.

Based on the foregoing technical solutions, in the embodiments of the present invention, the transmission status of the uplink MTC data can be determined according to whether the transmission state feedback information is received from the base station within the predetermined time. Compared with the prior art, an amount of transmission state feedback information may be reduced, so that transmission resources can be saved.

According to a fifth aspect, an information transmission method is provided, the method is applied to machine type communication MTC, and the method includes:
performing a transmission operation corresponding to a first transmission state when receiving first transmission state feedback information from a base station within a predetermined time; or performing a transmission operation corresponding to a second transmission state when receiving no transmission state feedback information from the base station within the predetermined time, where the first transmission state is one of "transmission succeeds" and "transmission fails", the second transmission state is the other one of "transmission succeeds" and "transmission fails", the first transmission state feedback information is one of acknowledgement ACK information and negative acknowledgement NACK information, the first transmission state feedback information is corresponding to the first transmission state, and the transmission state feedback information includes the ACK information and/or the NACK information.

With reference to the fifth aspect, in a first possible implementation, the performing a transmission operation corresponding to a first transmission state when receiving first transmission state feedback information from a base station within a predetermined time includes:
transmitting a next piece of uplink data when receiving the ACK information from the base station within the predetermined time; or
the performing a transmission operation corresponding to a second transmission state when receiving no transmission state feedback information from the base station within the predetermined time includes:
   retransmitting previously sent uplink data when receiving no ACK information from the base station within the predetermined time.

With reference to the fifth aspect, in a second possible implementation, the performing a transmission operation corresponding to a first transmission state when receiving first transmission state feedback information from a base station within a predetermined time includes:
retransmitting previously sent uplink data when receiving the NACK information from the base station within the predetermined time; or
the performing a transmission operation corresponding to a second transmission state when receiving no transmission state feedback information from the base station within the predetermined time includes:
   transmitting a next piece of uplink data when receiving no NACK information from the base station within the predetermined time.

With reference to the fifth aspect, in a third possible implementation, the performing a transmission operation corresponding to a first transmission state when receiving first transmission state feedback information from a base station within a predetermined time includes:
transmitting a next piece of uplink data when receiving the ACK information from the base station within the predetermined time and when a previous piece of sent uplink data is not the last piece of uplink data; or
the performing a transmission operation corresponding to a second transmission state when receiving no transmission state feedback information from the base station within the predetermined time includes:
   retransmitting previously sent uplink data when receiving no ACK information from the base station within the predetermined time and when the previously sent uplink data is not the last piece of uplink data; or
   the performing a transmission operation corresponding to a first transmission state when receiving first transmission state feedback information from a base station within a predetermined time includes:
      retransmitting previously sent uplink data when receiving the NACK information from the base station within the predetermined time and when the previously sent uplink data is the last piece of uplink data; or
      the performing a transmission operation corresponding to a second transmission state when receiving no transmission state feedback information from the base station within the predetermined time includes:
         when receiving no NACK information from the base station within the predetermined time and when a previous piece of sent uplink data is the last piece of uplink data, determining that a transmission status of the previous piece of uplink data is "transmission succeeds".

With reference to any one of the fifth aspect, or the first to the third possible implementations of the fifth aspect, in a fourth possible implementation, the method further includes:
receiving timing information sent by the base station; and
determining the predetermined time according to the timing information.

With reference to the fourth possible implementation of the fifth aspect, in a fifth possible implementation, the receiving timing information sent by the base station includes:
receiving the timing information sent by the base station by using a machine type communication physical downlink control channel M-PDCCH.

With reference to any one of the fifth aspect, or the first to the third possible implementations of the fifth aspect, in a sixth possible implementation, the predetermined time is associated with a quantity of repetitions or a coverage enhancement level of an uplink data channel.

With reference to any one of the fifth aspect, or the first to the sixth possible implementations of the fifth aspect, in a seventh possible implementation, the first transmission state feedback information is sent by the base station by using an M-PDCCH.

According to a sixth aspect, an information transmission method is provided, the method is applied to machine type communication MTC, and the method includes:
sending first transmission state feedback information to a terminal when determining that a transmission status of uplink data is a first transmission state; or skipping sending transmission state feedback information to the terminal when determining that a transmission status of the uplink data is a second transmission state, where the first transmission state is one of "transmission succeeds" and "transmission fails", the second transmission state is the other one of "transmission succeeds" and "transmission fails", the first transmission state feedback information is one of acknowledgement ACK information and negative acknowledgement NACK information, the first transmission state feedback information is corresponding to the first transmission state, and the transmission state feedback information includes the ACK information and/or the NACK information.

With reference to the sixth aspect, in a first possible implementation, the sending first transmission state feedback information to a terminal when determining that a transmission status of uplink data is a first transmission state includes:
sending the ACK information to the terminal when determining that the transmission status of the uplink data is "transmission succeeds"; or
the skipping sending transmission state feedback information to the terminal when determining that a transmission status of the uplink data is a second transmission state includes:
   skipping sending the NACK information to the terminal when determining that the transmission status of the uplink data is "transmission fails".

With reference to the sixth aspect, in a second possible implementation, the sending first transmission state feedback information to a terminal when determining that a transmission status of uplink data is a first transmission state includes:
sending the NACK information to the terminal when determining that the transmission status of the uplink data is "transmission fails"; or
the skipping sending transmission state feedback information to the terminal when determining that a transmission status of the uplink data is a second transmission state includes:
   skipping sending the ACK information to the terminal when determining that the transmission status of the uplink data is "transmission succeeds".

With reference to the sixth aspect, in a third possible implementation, the sending first transmission state feedback information to a terminal when determining that a transmission status of uplink data is a first transmission state includes:
sending the ACK information to the terminal when determining that the transmission status of the uplink data is "transmission succeeds" and when the uplink data is not the last piece of uplink data; or
the skipping sending transmission state feedback information to the terminal when determining that a transmission status of the uplink data is a second transmission state includes:
   skipping sending the NACK information to the terminal when determining that the transmission status of the uplink data is "transmission fails" and when the uplink data is not the last piece of uplink data; or
   the sending first transmission state feedback information to a terminal when determining that a transmission status of uplink data is a first transmission state includes:
      sending the NACK information to the terminal when determining that the transmission status of the uplink data is "transmission fails" and when the uplink data is the last piece of uplink data; or
      the skipping sending transmission state feedback information to the terminal when determining that a transmission status of the uplink data is a second transmission state includes:
         skipping sending the ACK information to the terminal when determining that the transmission status of the uplink data is "transmission succeeds" and when the uplink data is the last piece of uplink data.

With reference to any one of the sixth aspect, or the first to the third possible implementations of the sixth aspect, in a fourth possible implementation, the method further includes:
sending timing information to the terminal, where the timing information is used to determine a predetermined time, and the predetermined time is used by the terminal to perform, when no transmission state feedback information is received within the predetermined time, a transmission operation corresponding to the second transmission state.

With reference to the fourth possible implementation of the sixth aspect, in a fifth possible implementation, the sending timing information to the terminal includes:
sending the timing information to the terminal by using a machine type communication physical downlink control channel M-PDCCH.

With reference to any one of the sixth aspect, or the first to the fifth possible implementations of the sixth aspect, in a sixth possible implementation, the sending first transmission state feedback information to a terminal includes:
sending the first transmission state feedback information to the terminal by using an M-PDCCH.

According to a seventh aspect, a terminal is provided, the terminal is applied to machine type communication MTC, and the terminal includes:
a receiving module, configured to receive first transmission state feedback information from a base station; and
a transmission module, configured to: when the receiving module receives the first transmission state feedback information from the base station within a predetermined time, perform a transmission operation corresponding to a first transmission state; or when the receiving module receives no transmission state feedback information from the base station within the predetermined time, perform a transmission operation corresponding to a second transmission state, where the first transmission state is one of "transmission succeeds" and "transmission fails", the second transmission state is the other one of "transmission succeeds" and "transmission fails", the first transmission state feedback information is one of acknowledgement ACK information and negative acknowledgement NACK information, the first transmission state feedback information is corresponding to the first transmission state, and the transmission state feedback information includes the ACK information and/or the NACK information.

With reference to the seventh aspect, in a first possible implementation, the transmission module is specifically configured to:
transmit a next piece of uplink data when the receiving module receives the ACK information from the base station within the predetermined time; or retransmit previously sent uplink data when the receiving module receives no ACK information from the base station within the predetermined time.

With reference to the seventh aspect, in a second possible implementation, the transmission module is specifically configured to:
retransmit previously sent uplink data when the receiving module receives the NACK information from the base station within the predetermined time; or transmit a next piece of uplink data when the receiving module receives no NACK information from the base station within the predetermined time.

With reference to the seventh aspect, in a third possible implementation, the transmission module is specifically configured to:
transmit a next piece of uplink data when the receiving module receives the ACK information from the base station within the predetermined time and when a previous piece of sent uplink data is not the last piece of uplink data; or retransmit previously sent uplink data when the receiving module receives no ACK information from the base station within the predetermined time and when the previously sent uplink data is not the last piece of uplink data; or
retransmit previously sent uplink data when the receiving module receives the NACK information from the base station within the predetermined time and when the previously sent uplink data is the last piece of uplink data; or when the receiving module receives no NACK information from the base station within the predetermined time and when a previous piece of sent uplink data is the last piece of uplink data, determine that a transmission status of the previous piece of uplink data is "transmission succeeds".

With reference to any one of the seventh aspect, or the first to the third possible implementations of the seventh aspect, in a fourth possible implementation, the receiving module is further configured to receive timing information sent by the base station; and
the terminal further includes:
a determining module, configured to determine the predetermined time according to the timing information.

With reference to the fourth possible implementation of the seventh aspect, in a fifth possible implementation, the receiving module is specifically configured to receive the timing information sent by the base station by using a machine type communication physical downlink control channel M-PDCCH.

With reference to any one of the seventh aspect, or the first to the third possible implementations of the seventh aspect, in a sixth possible implementation, the predetermined time is associated with a quantity of repetitions or a coverage enhancement level of an uplink data channel.

With reference to any one of the seventh aspect, or the first to the sixth possible implementations of the seventh aspect, in a seventh possible implementation, the first transmission state feedback information is sent by the base station by using an M-PDCCH.

According to an eighth aspect, a base station is provided, the base station is applied to machine type communication MTC, and the base station includes:
a determining module, configured to determine a transmission status of uplink data; and
a sending module, configured to: send first transmission state feedback information to a terminal when the determining module determines that the transmission status of the uplink data is a first transmission state; or skip sending transmission state feedback information to the terminal when the determining module determines that the transmission status of the uplink data is a second transmission state, where the first transmission state is one of "transmission succeeds" and "transmission fails", the second transmission state is the other one of "transmission succeeds" and "transmission fails", the first transmission state feedback information is one of acknowledgement ACK information and negative acknowledgement NACK information, the first transmission state feedback information is corresponding to the first transmission state, and the transmission state feedback information includes the ACK information and/or the NACK information.

With reference to the eighth aspect, in a first possible implementation, the sending module is specifically configured to:
send the ACK information to the terminal when the determining module determines that the transmission status of the uplink data is "transmission succeeds"; or skip sending the NACK information to the terminal when the determining module determines that the transmission status of the uplink data is "transmission fails".

With reference to the eighth aspect, in a second possible implementation, the sending module is specifically configured to:
send the NACK information to the terminal when the determining module determines that the transmission status of the uplink data is "transmission fails"; or skip sending the ACK information to the terminal when the determining module determines that the transmission status of the uplink data is "transmission succeeds".

With reference to the eighth aspect, in a third possible implementation, the sending module is specifically configured to:
send the ACK information to the terminal when the determining module determines that the transmission status of the uplink data is "transmission succeeds" and when the uplink data is not the last piece of uplink data; or skip sending the NACK information to the terminal when the determining module determines that the transmission status of the uplink data is "transmission fails" and when the uplink data is not the last piece of uplink data; or
send the NACK information to the terminal when the determining module determines that the transmission status of the uplink data is "transmission fails" and when the uplink data is the last piece of uplink data; or skip sending the ACK information to the terminal when the determining module determines that the transmission status of the uplink data is "transmission succeeds" and when the uplink data is the last piece of uplink data.

With reference to any one of the eighth aspect, or the first to the third possible implementations of the eighth aspect, in a fourth possible implementation, the sending module is further configured to send timing information to the terminal, where the timing information is used to determine a predetermined time, and the predetermined time is used by the terminal to perform, when no transmission state feedback information is received within the predetermined time, a transmission operation corresponding to the second transmission state.

With reference to the fourth possible implementation of the eighth aspect, in a fifth possible implementation, the sending module is specifically configured to send the timing information to the terminal by using a machine type communication physical downlink control channel M-PDCCH.

With reference to any one of the eighth aspect, or the first to the fifth possible implementations of the eighth aspect, in a sixth possible implementation, the sending module is specifically configured to send the first transmission state feedback information to the terminal by using an M-PDCCH.

According to a ninth aspect, an information transmission method is provided, and the method includes:
sending, by a machine type communication MTC terminal, machine type communication uplink data to a base station; and
when a first condition or a second condition is met, the first condition includes: the terminal receives downlink control information from the base station within a predetermined time, where the downlink control information includes uplink index indication information corresponding to the uplink data, and the uplink index indication information indicates zero; and the second condition includes: the terminal receives no downlink control information from the base station within a predetermined time; and
determining, by the terminal, a transmission status of the uplink data according to terminal information of the terminal, where the terminal information includes at least one of the following: type information of the terminal or coverage enhancement information of the terminal; and the transmission status includes "transmission succeeds" or "transmission fails".

With reference to the ninth aspect, in a first possible implementation of the ninth aspect, the determining a transmission status of the uplink data according to terminal information of the terminal includes:
when meeting at least one of the following conditions, determining, by the terminal, that the transmission status of the uplink data is "transmission succeeds", where
the conditions include:
   the terminal is a terminal that supports a narrowband capability;
   the terminal has a coverage enhancement capability;
   the terminal runs in a particular coverage enhancement mode; and
   the terminal runs at a coverage enhancement level that meets a preset condition.

With reference to the ninth aspect, in a second possible implementation of the ninth aspect, the determining a transmission status of the uplink data according to terminal information of the terminal includes:
when meeting at least one of the following conditions, determining, by the terminal, that the transmission status of the uplink data is "transmission fails", where
the conditions include:
   the terminal is a terminal that supports a narrowband capability;
   the terminal has a coverage enhancement capability;
   the terminal runs in a particular coverage enhancement mode; and
   the terminal runs at a coverage enhancement level that meets a preset condition.

With reference to the ninth aspect, or the first possible implementation or the second possible implementation of the ninth aspect, in a third possible implementation of the ninth aspect, the method further includes:
receiving, by the terminal, timing information sent by the base station; and
setting, by the terminal, the predetermined time according to the timing information.

With reference to the third possible implementation of the ninth aspect, in a fourth possible implementation, the receiving, by the terminal, timing information sent by the base station includes:
receiving, by the terminal, the timing information sent by the base station by using a downlink control channel.

With reference to any one of the ninth aspect, or the first possible implementation to the fourth possible implementation, in a fifth possible implementation, the predetermined time is determined according to information about an unavailable downlink transmission subframe, a start subframe of downlink control channel search space, and one or more of the following parameters:
a quantity of repetitions of the downlink control channel, the coverage enhancement level of the terminal, a quantity of repetitions of a downlink control channel for scheduling a RAR message, a quantity of repetitions of a RAR message, or a quantity of repetitions that is of a control channel for scheduling a msg 3 and that is indicated by a UL grant in a RAR message.

According to a tenth aspect, an information transmission method is provided, and the method includes:
receiving, by a base station, machine type communication uplink data sent by a terminal; and
performing, by the base station, either of the following steps according to a receiving status of the uplink data and terminal information of the terminal:
   skipping sending downlink control information to the terminal; or sending downlink control information to the terminal, where the downlink control information includes uplink index indication information corresponding to the uplink data, and the uplink index indication information indicates zero, where
   the terminal information includes at least one of the following: type information of the terminal or coverage enhancement information of the terminal; and
   the receiving status includes "receiving succeeds" or "receiving fails".

With reference to the tenth aspect, in a first possible implementation of the tenth aspect, the performing, by the base station, either of the following steps according to a receiving status of the uplink data and terminal information of the terminal includes:
performing either of the following steps when the receiving status includes "receiving succeeds" and when the terminal meets at least one of the following conditions, where
the conditions include:
   the terminal is a terminal that supports a narrowband capability;
   the terminal has a coverage enhancement capability;
   the terminal runs in a particular coverage enhancement mode; and
   the terminal runs at a coverage enhancement level that meets a preset condition.

With reference to the tenth aspect, in a second possible implementation of the tenth aspect, the performing, by the base station, either of the following steps according to a receiving status of the uplink data and terminal information of the terminal includes:
performing either of the following steps when the receiving status includes "receiving fails" and the terminal meets at least one of the following conditions, where
the conditions include:
   the terminal is a terminal that supports a narrowband capability;
   the terminal has a coverage enhancement capability;
   the terminal runs in a particular coverage enhancement mode; and
   the terminal runs at a coverage enhancement level that meets a preset condition.

With reference to the tenth aspect, or the first possible implementation or the second possible implementation of the tenth aspect, in a third possible implementation of the tenth aspect, the method further includes:
sending, by the base station, timing information to the terminal, where the timing information is used to indicate a quantity of repetitions of the downlink control information.

With reference to the third possible implementation of the tenth aspect, in a fourth possible implementation of the tenth aspect, the sending, by the base station, timing information to the terminal includes:
sending, by the base station, the timing information to the terminal by using information about an unavailable downlink transmission subframe and a start subframe of downlink control channel search space and in at least one of the following manners, where
the manners include:
   a downlink control channel for scheduling unicast uplink data transmission;
   a particular coverage enhancement mode in which the terminal runs and that is configured by the base station;
   a coverage enhancement level at which the terminal runs and that is indicated by the base station;
   a quantity of repetitions of a downlink control channel for scheduling a RAR message;
   a quantity of repetitions of a RAR message; and
   a quantity of repetitions that is of a downlink control channel for scheduling a msg 3 and that is indicated by a UL grant in a RAR message.

According to an eleventh aspect, a terminal is provided, and includes a sending unit, a receiving unit, and a processing unit, where
the sending unit is configured to send machine type communication uplink data to a base station; and
the processing unit is configured to determine a transmission status of the uplink data according to terminal information of the terminal when a first condition or a second condition is met, where
the first condition includes: the receiving unit receives downlink control information from the base station within a predetermined time, where the downlink control information includes uplink index indication information corresponding to the uplink data, and the uplink index indication information indicates zero;
the second condition includes: the receiving unit receives no downlink control information from the base station within a predetermined time;
the terminal information includes at least one of the following: type information of the terminal or coverage enhancement information of the terminal; and
the transmission status includes "transmission succeeds" or "transmission fails".

With reference to the eleventh aspect, in a first implementation of the eleventh aspect, the processing unit is configured to: when the terminal meets at least one of the following conditions, determine that the transmission status of the uplink data is "transmission succeeds", where
the conditions include:
the terminal is a terminal that supports a narrowband capability;
the terminal has a coverage enhancement capability;
the terminal runs in a particular coverage enhancement mode; and
the terminal runs at a coverage enhancement level that meets a preset condition.

With reference to the eleventh aspect, in a second implementation of the eleventh aspect, the processing unit is configured to: when the terminal meets at least one of the following conditions, determine that the transmission status of the uplink data is "transmission fails", where
the conditions include:
the terminal is a terminal that supports a narrowband capability;
the terminal has a coverage enhancement capability;
the terminal runs in a particular coverage enhancement mode; and
the terminal runs at a coverage enhancement level that meets a preset condition.

With reference to the eleventh aspect, or the first implementation or the second implementation of the eleventh aspect, in a third possible implementation of the eleventh aspect, the receiving unit is configured to receive timing information sent by the base station; and
the processing unit is further configured to set the predetermined time according to the timing information received by the receiving unit.

With reference to the third possible implementation of the eleventh aspect, in a fourth possible implementation of the eleventh aspect, the receiving unit is specifically configured to:
receive the timing information sent by the base station by using a downlink control channel.

With reference to any one of the eleventh aspect, or the first possible implementation to the fourth possible implementation of the eleventh aspect, in a fifth possible implementation of the eleventh aspect, the predetermined time is determined according to information about an unavailable downlink transmission subframe, a start subframe of downlink control channel search space, and one or more of the following parameters:
a quantity of repetitions of the downlink control channel, the coverage enhancement level of the terminal, a quantity of repetitions of a downlink control channel for scheduling a RAR message, a quantity of repetitions of a RAR message, or a quantity of repetitions that is of a control channel for scheduling a msg 3 and that is indicated by a UL grant in a RAR message.

According to a twelfth aspect, a base station is provided, and includes a receiving unit, a processing unit, and a sending unit, where
the receiving unit is configured to receive machine type communication uplink data sent by a terminal; and
the processing unit is configured to perform either of the following steps according to terminal information of the terminal and a receiving status of receiving the uplink data by the receiving unit:
skipping sending downlink control information to the terminal; or sending downlink control information to the terminal by using the sending unit, where the downlink control information includes uplink index indication information corresponding to the uplink data, and the uplink index indication information indicates zero, where
the terminal information includes at least one of the following: type information of the terminal or coverage enhancement information of the terminal; and
the receiving status includes "receiving succeeds" or "receiving fails".

With reference to the twelfth aspect, in a first possible implementation of the twelfth aspect, the processing unit is specifically configured to:
perform either of the following steps when the receiving status includes "receiving succeeds" and when the terminal meets at least one of the following conditions, where
the conditions include:
   the terminal is a terminal that supports a narrowband capability;
   the terminal has a coverage enhancement capability;
   the terminal runs in a particular coverage enhancement mode; and
   the terminal runs at a coverage enhancement level that meets a preset condition.

With reference to the twelfth aspect, in a second possible implementation of the twelfth aspect, the processing unit is specifically configured to:
perform either of the following steps when the receiving status includes "receiving fails" and when the terminal meets at least one of the following conditions, where
the conditions include:
   the terminal is a terminal that supports a narrowband capability;
   the terminal has a coverage enhancement capability;
   the terminal runs in a particular coverage enhancement mode; and
   the terminal runs at a coverage enhancement level that meets a preset condition.

With reference to the twelfth aspect, or the first possible implementation or the second possible implementation of the twelfth aspect, in a third possible implementation of the twelfth aspect, the sending unit is configured to send timing information to the terminal, where the timing information is used to indicate a quantity of repetitions of the downlink control information.

With reference to the third possible implementation of the twelfth aspect, in a fourth possible implementation of the twelfth aspect, the sending unit is specifically configured to:
send the timing information to the terminal by using information about an unavailable downlink transmission subframe and a start subframe of downlink control channel search space and in at least one of the following manners, where
the manners include:
   a downlink control channel for scheduling unicast uplink data transmission;
   a particular coverage enhancement mode in which the terminal runs and that is configured by the base station;
   a coverage enhancement level at which the terminal runs and that is indicated by the base station;
   a quantity of repetitions of a downlink control channel for scheduling a RAR message;
   a quantity of repetitions of a RAR message; and
   a quantity of repetitions that is of a downlink control channel for scheduling a msg 3 and that is indicated by a UL grant in a RAR message.

Based on the foregoing technical solutions, the uplink transmission status in the MTC scenario is determined. In the embodiments of the present invention, the transmission status of the MTC data is determined according to the terminal information, so that the transmission status can be determined when no downlink control information is received from the base station, or the transmission status can be determined when the uplink index indication information that is corresponding to the MTC data and included in the received downlink control information indicates zero. In the embodiments of the present invention, the transmission operation corresponding to the first transmission state is performed when the first transmission state feedback information is received from the base station within the predetermined time, or the transmission operation corresponding to the second transmission state is performed when no transmission state feedback information is received within the predetermined time, so that an amount of transmission state feedback information can be reduced, and transmission resources can be accordingly saved.

The following explains English acronyms of the technical terms and corresponding full English expressions/standard English terms, Chinese expressions/Chinese terms in the embodiments of the present invention, so as to facilitate understanding of a person skilled in the art. Details are shown in Table 1:

**Table 1**

| **English acronym** | **Full English Expression/Standard English Term** | **Chinese Expression/Chinese Term** |
|---|---|---|
| M2M | Machine to Machine | Machine to machine |
| ACK/NACK | Acknowledge/non-acknowledge | Acknowledge/non-acknowledge |
| MTC | Machine Type Communication | Machine type communication |
| CE | coverage enhancement | coverage enhancement |
| CE level | coverage enhancement level | coverage enhancement level |
| PHICH | Physical Hybrid ARQ Indicator Channel | Physical hybrid automatic repeat request indicator channel |
| PU/DSCH | Physical Uplink/Downlink Shared Channel | Physical uplink/downlink shared channel |
| RAR | Random Access Response | Random access response |
| UL grant | Uplink grant | Uplink grant |
| DCI | downlink control information | downlink control information |
| DRX | Discontinuous Reception | Discontinuous reception |
| eNB | evolved NodeB | evolved NodeB |
| (E) PDCCH | (enhanced) physical downlink control channel | (enhanced) physical downlink control channel |
| FDD | Frequency Division Duplexing | Frequency division duplex |
| HARQ | Hybrid Automatic Repeat Request | Hybrid automatic repeat request |
| LTE | Long Term Evolution | Long Term Evolution |
| NDI | new data indicator | new data indicator |
| PDSCH | physical downlink shared channel | physical downlink shared channel |
| M-PDCCH | | Physical cell identity number |
| | special subframe | special subframe |
| RRC | Radio Resource Control | Radio resource control |
| | normal HARQ operation | normal HARQ operation |
| MSB | Most Significant Bit | Most significant bit |
| LSB | Least Significant Bit | Least significant bit |
| UL index | Uplink index | Uplink index |
| TDD | Time Division Duplexing | Time division duplex |
| TM | transmission mode | transmission mode |
| TTI | Transmission Time Interval | Transmission time interval |
| UE | User Equipment | User equipment |

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic flowchart of an information transmission method according to an embodiment of the present invention;
FIG. 2 is a schematic flowchart of an information transmission method according to another embodiment of the present invention;
FIG. 3 is a schematic flowchart of an information transmission method according to still another embodiment of the present invention;
FIG. 4 is a schematic flowchart of an information transmission method according to still another embodiment of the present invention;
FIG. 5 is a schematic flowchart of an information transmission method according to still another embodiment of the present invention;
FIG. 5A is a schematic flowchart of an information transmission method according to still another embodiment of the present invention;
FIG. 5B is a schematic flowchart of an information transmission method according to still another embodiment of the present invention;
FIG. 5C is a schematic flowchart of an information transmission method according to still another embodiment of the present invention;
FIG. 5D is a schematic flowchart of an information transmission method according to still another embodiment of the present invention;
FIG. 5E is a schematic diagram of a process in which a terminal in a coverage enhancement mode A transmits a PUSCH and receives downlink control information from a base station according to an embodiment of the present invention;
FIG. 5F is a schematic flowchart of an information transmission method according to still another embodiment of the present invention;
FIG. 5G is a schematic diagram of a process in which a terminal transmits a PUSCH and receives downlink control information from a base station according to an embodiment of the present invention;
FIG. 5H is a schematic flowchart of an information transmission method according to still another embodiment of the present invention;
FIG. 6 is a schematic block diagram of a terminal according to an embodiment of the present invention;
FIG. 6A is a schematic block diagram of a terminal according to another embodiment of the present invention;
FIG. 7 is a schematic block diagram of a base station according to an embodiment of the present invention;
FIG. 7A is a schematic block diagram of a base station according to another embodiment of the present invention;
FIG. 8 is a schematic structural diagram of a terminal according to another embodiment of the present invention; and
FIG. 9 is a schematic structural diagram of a base station according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some rather than all of the embodiments of the present invention. All other embodiments obtained by a person of ordinary skill in the art based on the embodiments of the present invention without creative efforts shall fall within the protection scope of the present invention.

The technical solutions in the embodiments of the present invention may be applied to MTC scenarios in various communications systems. The various communications systems may be a Global System for Mobile Communications (Global System of Mobile communication, GSM) system, a Code Division Multiple Access (Code Division Multiple Access, CDMA) system, a Wideband Code Division Multiple Access (Wideband Code Division Multiple Access, WCDMA) system, a general packet radio service (General Packet Radio Service, GPRS) system, a Long Term Evolution (Long Term Evolution, LTE) system, an LTE frequency division duplex (Frequency Division Duplex, FDD) system, an LTE time division duplex (Time Division Duplex, TDD) system, the Universal Mobile Telecommunications System (Universal Mobile Telecommunication System, UMTS), a Worldwide Interoperability for Microwave Access (Worldwide Interoperability for Microwave Access, WiMAX) communications system, and the like.

A terminal in the embodiments of the present invention may be an MTC device, or may be a common terminal for performing an MTC service, and may be generally referred to as an MTC terminal. The terminal (Terminal) may be referred to as user equipment (User Equipment, UE), a mobile station (Mobile Station, MS), a mobile terminal (Mobile Terminal), or the like. The terminal may communicate with one or more core networks by using a radio access network (Radio Access Network, RAN). For example, the terminal may be a mobile phone (or referred to as a "cellular phone") or a computer with a mobile terminal. For example, alternatively, the terminal may be a portable, pocket-sized, handheld, computer built-in, or in-vehicle mobile apparatus, which exchanges voice and/or data with the radio access network. Generally, the MTC terminal has one or more of the following features: supporting a narrowband capability or a coverage enhancement capability, running in a particular coverage enhancement mode, or running at a coverage enhancement level that meets a preset condition.

In the embodiments of the present invention, a base station may be a base transceiver station (Base Transceiver Station, BTS) in the GSM or the CDMA, may be a NodeB (NodeB, NB) in the WCDMA, or may be an evolved NodeB (Evolved Node B, eNB or eNodeB) in the LTE. This is not limited in the present invention. However, for convenience of description, the following embodiments are described by using the base station eNB and the terminal as examples.

In the embodiments of the present invention, a downlink control channel may include an (enhanced physical downlink control channel, EPDCCH) defined in an existing standard or a machine type communication physical downlink control channel M-PDCCH (MTC PDCCH). The M-PDCCH indicates a control channel used for scheduling an MTC device, and may be an EPDCCH or another control channel that meets an MTC feature or requirement. This is not limited in the present invention. For convenience of description, the subsequent description is provided in the present invention by using the M-PDCCH as an example, but this does not constitute a limitation on the scope of the present invention.

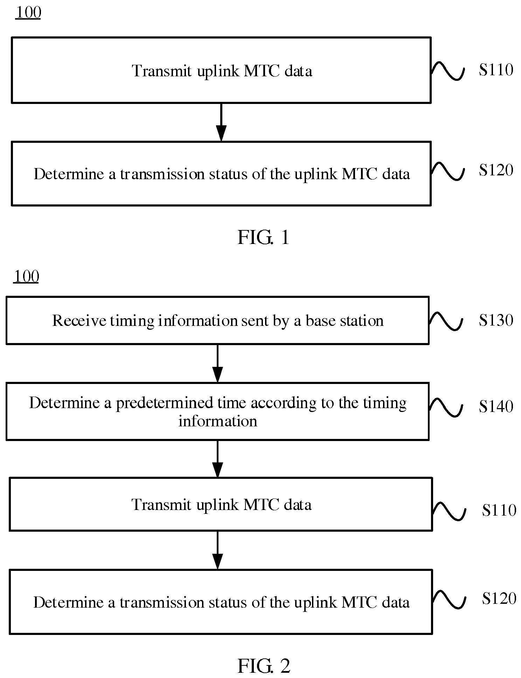

According to a first aspect, referring to FIG. 1 to FIG. 4, an embodiment of the present invention provides an information transmission method 100, so that an amount of transmission state feedback information can be reduced, and transmission resources can be saved. The following provides a detailed description with reference to the accompanying drawings.

FIG. 1 is a schematic flowchart of an information transmission method 100 according to an embodiment of the present invention. The method 100 is applied to MTC. The method 100 is performed by a terminal. As shown in FIG. 1, the method 100 includes the following steps:
S110. Transmit uplink MTC data. S110 is specifically: sending the MTC data to a base station.
S120. Determine a transmission status of the uplink MTC data. S120 includes:
   when receiving transmission state feedback information from the base station within a predetermined time, determining that the transmission status of the MTC data is a first transmission state; or when receiving no transmission state feedback information from the base station within the predetermined time, determining that the transmission status of the MTC data is a second transmission state.

The first transmission state is one of "transmission succeeds" and "transmission fails", and the second transmission state is the other one of "transmission succeeds" and "transmission fails". The transmission state feedback information is one of acknowledgement ACK information and negative acknowledgement NACK information. The ACK information indicates that transmission succeeds, and the NACK information indicates that transmission fails.

Based on a solution in this embodiment of the present invention, the terminal may determine the transmission status of the uplink MTC data according to whether the transmission state feedback information is received from the base station within the predetermined time. Compared with the prior art, an amount of transmission state feedback information may be reduced, so that transmission resources can be saved.

In an optional implementation, the transmission state feedback information is the ACK information, the first transmission state is "transmission succeeds", and the second transmission state is "transmission fails". In an application scenario, the optional implementation may be applied when a failure rate of the uplink MTC data transmission is relatively high (for example, exceeds 50%). In this case, the amount of transmission state feedback information can be effectively reduced, and the transmission resources can be further saved.

In another optional implementation, the transmission state feedback information is the NACK information, the first transmission state is "transmission fails", and the second transmission state is "transmission succeeds". The optional implementation is particularly applicable when a success rate of the uplink MTC data transmission is relatively high (for example, exceeds 50%).

In an application scenario, the optional implementation may be applied when the success rate of the uplink MTC data transmission is relatively high (for example, exceeds 50%). In this case, the amount of transmission state feedback information can be effectively reduced, and the transmission resources can be further saved.

Based on the optional implementation, in another application scenario, the NACK information is included in a downlink control channel, the downlink control channel further includes retransmission scheduling information, and the retransmission scheduling information is scheduling information used to instruct to retransmit the MTC data. In this case, because the transmission fails, the terminal needs to retransmit the uplink MTC data. Configuration information such as a resource location for retransmitting the uplink MTC data may be predefined. Alternatively, the base station sends the retransmission scheduling information on the downlink control channel, to indicate the configuration information. In this case, the NACK information is also transmitted by using the downlink control channel, so that resources can be multiplexed to save transmission resources. In particular, the optional implementation is especially applicable when the MTC data is the last piece of MTC data.

In addition, after the transmission status of the uplink MTC data is determined, a corresponding operation may be performed for the transmission status. An example is used in the following description.

When first transmission state feedback information is received from the base station within the predetermined time, a transmission operation corresponding to the first transmission state is performed.

When no transmission state feedback information is received from the base station within the predetermined time, a transmission operation corresponding to the second transmission state is performed.

The first transmission state is one of "receiving succeeds" and "receiving fails", and the second transmission state is the other one of "receiving succeeds" and "receiving fails". The first transmission state feedback information is one of ACK information and NACK information, the first transmission state feedback information is corresponding to the first transmission state, and the transmission state feedback information includes the ACK information and/or the NACK information.

The base station may successfully receive or may fail to receive uplink data of the terminal, that is, there are two transmission states: "receiving succeeds" and "receiving fails". In this embodiment of the present invention, the base station sends only transmission state feedback information (indicated as the first transmission state feedback information) corresponding to one transmission state (indicated as the first transmission state). When receiving the first transmission state feedback information within the predetermined time, the terminal performs the transmission operation corresponding to the first transmission state. When receiving no transmission state feedback information within the predetermined time, the terminal performs the transmission operation corresponding to the other transmission state (indicated as the second transmission state). In this way, an amount of sent transmission state feedback information is reduced, so that transmission resources can be saved.

Therefore, according to the information transmission method in this embodiment of the present invention, the transmission operation corresponding to the first transmission state is performed when the first transmission state feedback information is received from the base station within the predetermined time, or the transmission operation corresponding to the second transmission state is performed when no transmission state feedback information is received within the predetermined time, so that the amount of transmission state feedback information can be reduced, and the transmission resources can be accordingly saved.

It should be understood that this embodiment of the present invention is also used to determine a transmission status of downlink data. That is, the method is performed by the base station. For example:
S110_B. Perform a transmission operation corresponding to a first transmission state when receiving first transmission state feedback information from the terminal within a predetermined time.
S120_B. Perform a transmission operation corresponding to a second transmission state when receiving no transmission state feedback information from the terminal within the predetermined time.

Whether the first transmission state feedback information is received within the predetermined time may be determined by using a timer. Timer information of the timer may be configured by using a control channel, or may be determined according to a control channel level, a quantity of repetitions, and a terminal level.

Alternatively, for downlink data state feedback, there are three states including "transmission succeeds" (ACK), "transmission fails" (NACK), and discontinuous transmission (DTX). Therefore, this embodiment may be as follows:
S110_C. Perform a transmission operation corresponding to a first transmission state when receiving first transmission state feedback information from the terminal within a predetermined time.
S120_C. Skip performing a transmission operation corresponding to a first transmission state when receiving no transmission state feedback information from the terminal within the predetermined time.

Optionally, the technical solution in this embodiment of the present invention is applied when a coverage enhancement requirement reaches a specific degree, for example, when a coverage enhancement level is relatively high. In this case, a waste of resources is especially severe in an existing solution. Therefore, more resources can be saved in the technical solution in this embodiment of the present invention.

Optionally, in an embodiment of the present invention, the terminal transmits a next piece of uplink data when receiving the ACK information from the base station within the predetermined time; or retransmits previously sent uplink data when receiving no ACK information from the base station within the predetermined time.

That is, in this embodiment, the base station sends only the ACK information. The terminal transmits the next piece of uplink data when receiving the ACK information within the predetermined time, or retransmits the previous piece of uplink data when receiving no ACK information within the predetermined time.

It should be understood that in various embodiments of the present invention, transmitting a next piece of uplink data indicates sending new uplink data, and retransmitting previously sent uplink data indicates retransmitting previously sent uplink data. In addition, the previously sent uplink data is corresponding to an ACK/NACK sent by the base station, that is, the ACK/NACK is a feedback on a status of the previously sent uplink data.

Optionally, in another embodiment of the present invention, the terminal retransmits previously sent uplink data when receiving the NACK information from the base station within the predetermined time; or transmits a next piece of uplink data when receiving no NACK information from the base station within the predetermined time.

That is, in this embodiment, the base station sends only the NACK information. The terminal retransmits the previous piece of uplink data when receiving the NACK information within the predetermined time, or transmits the next piece of uplink data when receiving no NACK information within the predetermined time.

In the two embodiments, the base station sends only the ACK information or only the NACK information. Further, alternatively, only ACK information or only NACK information may be correspondingly sent according to whether uplink data is the last piece of uplink data. The following provides a detailed description.

Optionally, in another embodiment of the present invention, the terminal transmits a next piece of uplink data when receiving the ACK information from the base station within the predetermined time and when a previous piece of sent uplink data is not the last piece of uplink data; or retransmits previously sent uplink data when receiving no ACK information from the base station within the predetermined time and when the previously sent uplink data is not the last piece of uplink data.

Alternatively, the terminal retransmits previously sent uplink data when receiving the NACK information from the base station within the predetermined time and when the previously sent uplink data is the last piece of uplink data; or when receiving no NACK information from the base station within the predetermined time and when a previous piece of sent uplink data is the last piece of uplink data, determines that a transmission status of the previous piece of uplink data is "transmission succeeds".

That is, in this embodiment, when the uplink data is not the last piece of uplink data, the base station sends only the ACK information and does not send the NACK information. When the uplink data is the last piece of uplink data, the base station sends only the NACK information and does not send the ACK information.

Optionally, in another embodiment of the present invention, the terminal retransmits previously sent uplink data when receiving the NACK information from the base station within the predetermined time and when the previously sent uplink data is not the last piece of uplink data; or transmits a next piece of uplink data when receiving no NACK information from the base station within the predetermined time and when a previous piece of sent uplink data is not the last piece of uplink data.

Alternatively, when receiving the ACK information from the base station within the predetermined time and when a previous piece of sent uplink data is the last piece of uplink data, the terminal determines that a transmission status of the previous piece of uplink data is "transmission succeeds"; or retransmits previously sent uplink data when receiving no ACK information from the base station within the predetermined time and when the previously sent uplink data is the last piece of uplink data.

That is, in this embodiment, when the uplink data is not the last piece of uplink data, the base station sends only the NACK information and does not send the ACK information. When the uplink data is the last piece of uplink data, the base station sends only the ACK information and does not send the NACK information.

It should be understood that, in various embodiments of the present invention, the terminal may monitor one of an ACK or a NACK, or may simultaneously monitor an ACK and a NACK. For example, when the base station sends only the ACK, the terminal cannot receive any transmission state feedback information in a "transmission fails" state. Therefore, this situation may be that no ACK information is received from the base station within the predetermined time, may be that no NACK information is received from the base station within the predetermined time, or may be that neither ACK information nor NACK information is received from the base station within the predetermined time. Another case is similar to this case. Details are not described herein.

In this embodiment of the present invention, the predetermined time may be indicated by the base station, or may be preconfigured.

Optionally, in an embodiment of the present invention, as shown in FIG. 2, the method 100 may further include the following steps:
S130. Receive timing information sent by the base station.
S140. Determine the predetermined time according to the timing information.

Specifically, in this embodiment, the predetermined time may be indicated by the base station. The timing information may be an interval relative to a moment at which the uplink data is sent. The base station sends the timing information to the terminal. Specifically, the base station may send the timing information to the terminal by using a downlink control channel such as an M-PDCCH, for example, may indicate the timing information when performing scheduling by using the M-PDCCH. The base station may determine the timing information according to an MTC communication status, and indicate the timing information to the terminal. In consideration of an MTC communication feature, the predetermined time may be relatively long, for example, more than four transmission time intervals (Transmission Time Interval, TTI).

Optionally, in another embodiment of the present invention, the predetermined time may be determined according to one or more of the following parameters:
a quantity of repetitions of the downlink control channel, a coverage enhancement level of the downlink control channel, or a coverage enhancement level of the terminal.

Specifically, the predetermined time may not need to be indicated by the base station, but may be preconfigured to be associated with an MTC communication status, for example, associated with a quantity of repetitions or a coverage enhancement level of an uplink data channel. For example, the predetermined time is several transmission time intervals when the quantity of repetitions of the downlink control channel or the coverage enhancement level of the downlink control channel is a specific value. In this way, the terminal may determine the predetermined time according to the quantity of repetitions of the downlink control channel or the coverage enhancement level of the downlink control channel. For another example, the predetermined time is associated with the coverage enhancement level of the terminal. For example, the predetermined time is several transmission time intervals when the coverage enhancement level of the terminal is a specific value. In this way, the terminal may determine the predetermined time according to the coverage enhancement level of the terminal.

In this embodiment of the present invention, the predetermined time may be implemented by using a time window or a timer. For example, the terminal may receive ACK/NACK information based on the timer. In this case, the predetermined time is specifically duration (duration) of the timer.

Optionally, the base station may send transmission state feedback information (ACK/NACK) based on the timer, so as to ensure that when the base station sends the transmission state feedback information, the terminal can receive the transmission state feedback information from the base station within the predetermined time. That is, when needing to send the transmission state feedback information, the base station needs to send the information within a specific time.

In this embodiment of the present invention, optionally, the first transmission state feedback information is sent by the base station by using an M-PDCCH.

That is, the base station specifically sends the ACK/NACK information by using the M-PDCCH.

Optionally, there are the following two implementation methods for sending the ACK/NACK information by using the M-PDCCH:
First, the ACK/NACK information may be directly carried on the M-PDCCH, that is, the ACK/NACK information is carried by using a bit on the M-PDCCH.
Second, the ACK/NACK information may be implicitly indicated. For example, when an NDI field in DCI indicates transmission of new data, it indicates that transmission of a previous piece of data succeeds, so as to implicitly indicate the ACK information. When an NDI field indicates data that is not initially transmitted, it indicates that transmission of a previous piece of data fails, so as to implicitly indicate the NACK information.

It should be understood that in the prior art, an ACK/NACK has an explicit definition and is carried on a PHICH, and the ACK/NACK sent by a base station is corresponding to a transmission status of previously sent uplink data. The MTC terminal does not support the PHICH. Therefore, in the present invention, a meaning of directly carrying the ACK/NACK information on the M-PDCCH is the same as a meaning of carrying the ACK/NACK information on the PHICH in the prior art. When the M-PDCCH implicitly indicates the ACK/NACK information, for example, by using the NDI field and/or a UL index, an effect thereof may be the same as that generated when the terminal directly receives the ACK/NACK. For convenience of description, the two transmission manners are collectively referred to as transmission state feedback information.

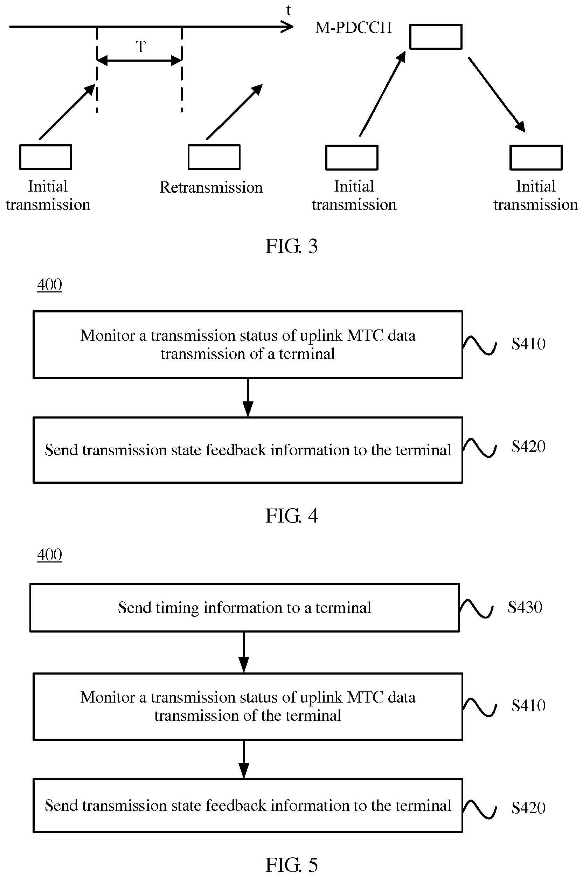

FIG. 3 shows an example of the information transmission method according to this embodiment of the present invention. The ACK information is implicitly indicated by the NDI on the M-PDCCH in FIG. 3. When correctly receiving the uplink MTC data, the base station does not send the M-PDCCH; or when receiving no uplink MTC data, the base station uses the M-PDCCH to instruct to schedule new data. As shown in FIG. 3, the terminal retransmits the data if the terminal receives no M-PDCCH within a predetermined time T; or initially transmits new data if the terminal receives the M-PDCCH within the predetermined time T.

The foregoing describes in detail the information transmission method according to this embodiment of the present invention from a perspective of the terminal. The following describes an information transmission method according to an embodiment of the present invention from a perspective of a base station. For content that is not described in detail herein, refer to the foregoing description.

FIG. 4 is a schematic flowchart of an information transmission method 400 according to an embodiment of the present invention. The method 400 is applied to MTC. The method 400 is performed by a base station. As shown in FIG. 4, the method 400 includes the following steps:
S410. Monitor a transmission status of uplink MTC data of a terminal.
S420. Send transmission state feedback information to the terminal. S420 includes:
   sending the transmission state feedback information to the terminal when the transmission status of the uplink MTC data is a first transmission state; or prohibiting sending the transmission state feedback information to the terminal when the transmission status of the uplink MTC data is a second transmission state.

The first transmission state is one of "transmission succeeds" and "transmission fails", and the second transmission state is the other one of "transmission succeeds" and "transmission fails". The transmission state feedback information is one of acknowledgement ACK information and negative acknowledgement NACK information. The ACK information indicates that transmission succeeds, and the NACK information indicates that transmission fails.

Based on a solution in this embodiment of the present invention, the terminal may determine the transmission status of the uplink MTC data according to whether the transmission state feedback information is received from the base station within a predetermined time. Compared with the prior art, an amount of transmission state feedback information may be reduced, so that transmission resources can be saved.

In an optional implementation, the transmission state feedback information is the ACK information, the first transmission state is "transmission succeeds", and the second transmission state is "transmission fails". In an application scenario, the optional implementation may be applied when a failure rate of the uplink MTC data transmission is relatively high (for example, exceeds 50%). In this case, the amount of transmission state feedback information can be effectively reduced, and the transmission resources can be further saved.

In another optional implementation, the transmission state feedback information is the NACK information, the first transmission state is "transmission fails", and the second transmission state is "transmission succeeds". The optional implementation is particularly applicable when a success rate of the uplink MTC data transmission is relatively high (for example, exceeds 50%).

In an application scenario, the optional implementation may be applied when the success rate of the uplink MTC data transmission is relatively high (for example, exceeds 50%). In this case, the amount of transmission state feedback information can be effectively reduced, and the transmission resources can be further saved.

Based on the optional implementation, in another application scenario, the NACK information is included in a downlink control channel, the downlink control channel further includes retransmission scheduling information, and the retransmission scheduling information is scheduling information used to instruct to retransmit the MTC data. In this case, because the transmission fails, the terminal needs to retransmit the uplink MTC data. Configuration information such as a resource location for retransmitting the uplink MTC data may be predefined. Alternatively, the base station sends the retransmission scheduling information on the downlink control channel, to indicate the configuration information. In this case, the NACK information is also transmitted by using the downlink control channel, so that resources can be multiplexed to save transmission resources. In particular, the optional implementation is especially applicable when the MTC data is the last piece of MTC data.

Optionally, in an embodiment of the present invention, the base station sends the ACK information to the terminal when determining that the transmission status of the uplink data is "transmission succeeds"; or does not send the NACK information to the terminal when determining that the transmission status of the uplink data is "transmission fails".

That is, in this embodiment, the base station sends only the ACK information and does not send the NACK information.

Optionally, in another embodiment of the present invention, the base station sends the NACK information to the terminal when determining that the transmission status of the uplink data is "transmission fails"; or does not send the ACK information to the terminal when determining that the transmission status of the uplink data is "transmission succeeds".

That is, in this embodiment, the base station sends only the NACK information and does not send the ACK information.

Optionally, in another embodiment of the present invention, the base station sends the ACK information to the terminal when determining that the transmission status of the uplink data is "transmission succeeds" and when the uplink data is not the last piece of uplink data; or does not send the NACK information to the terminal when determining that the transmission status of the uplink data is "transmission fails" and when the uplink data is not the last piece of uplink data.

Alternatively, the base station sends the NACK information to the terminal when determining that the transmission status of the uplink data is "transmission fails" and when the uplink data is the last piece of uplink data; or does not send the ACK information to the terminal when determining that the transmission status of the uplink data is "transmission succeeds" and when the uplink data is the last piece of uplink data.

That is, in this embodiment, when the uplink data is not the last piece of uplink data, the base station sends only the ACK information and does not send the NACK information. When the uplink data is the last piece of uplink data, the base station sends only the NACK information and does not send the ACK information.

Optionally, in another embodiment of the present invention, the base station sends the NACK information to the terminal when determining that the transmission status of the uplink data is "transmission fails" and when the uplink data is not the last piece of uplink data; or does not send the ACK information to the terminal when determining that the transmission status of the uplink data is "transmission succeeds" and when the uplink data is not the last piece of uplink data.

Alternatively, the base station sends the ACK information to the terminal when determining that the transmission status of the uplink data is "transmission succeeds" and when the uplink data is the last piece of uplink data; or does not send the NACK information to the terminal when determining that the transmission status of the uplink data is "transmission fails" and when the uplink data is the last piece of uplink data.

That is, in this embodiment, when the uplink data is not the last piece of uplink data, the base station sends only the NACK information and does not send the ACK information. When the uplink data is the last piece of uplink data, the base station sends only the ACK information and does not send the NACK information.

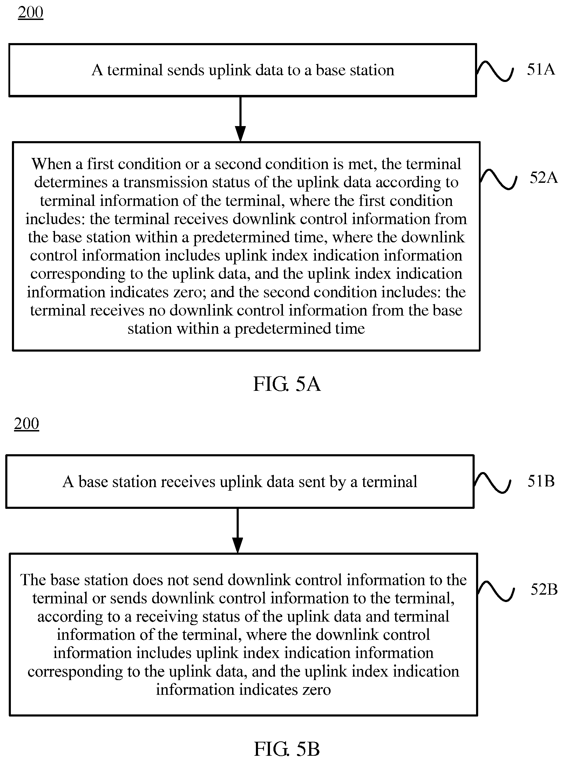

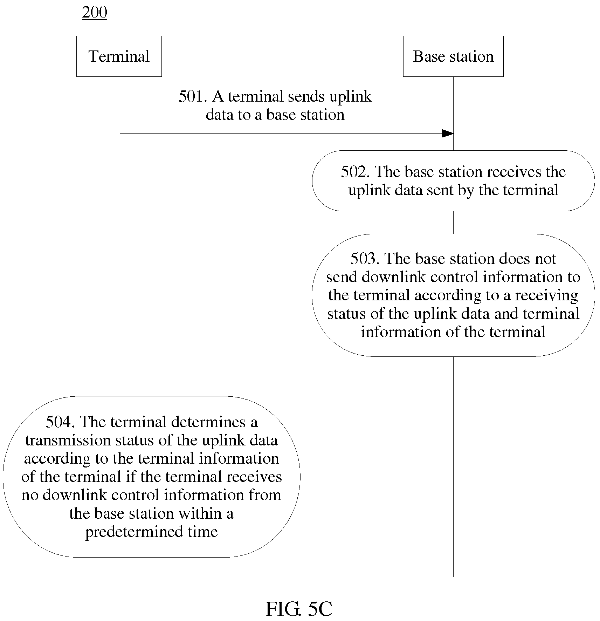

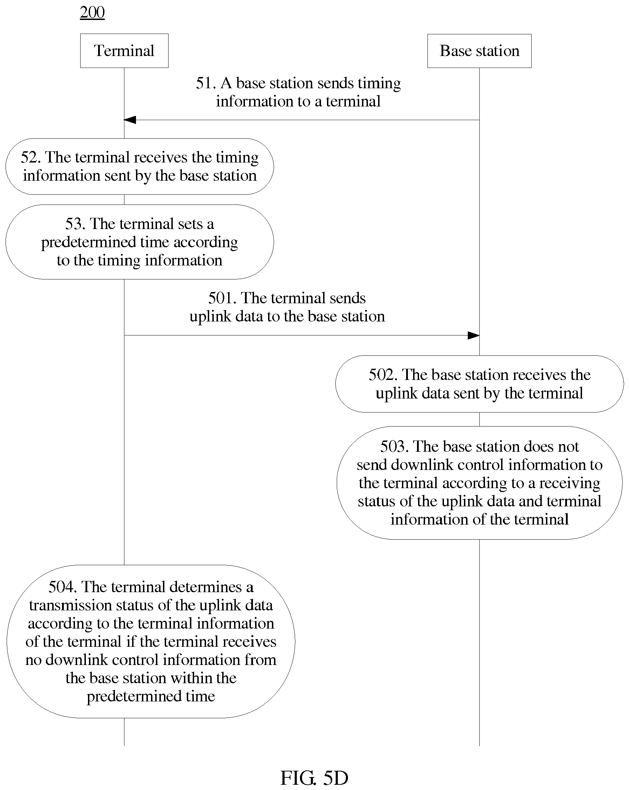

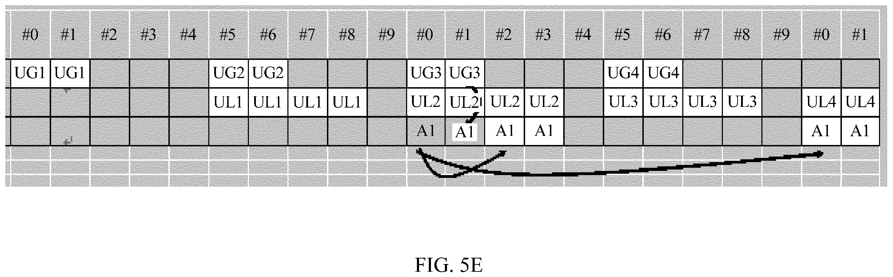

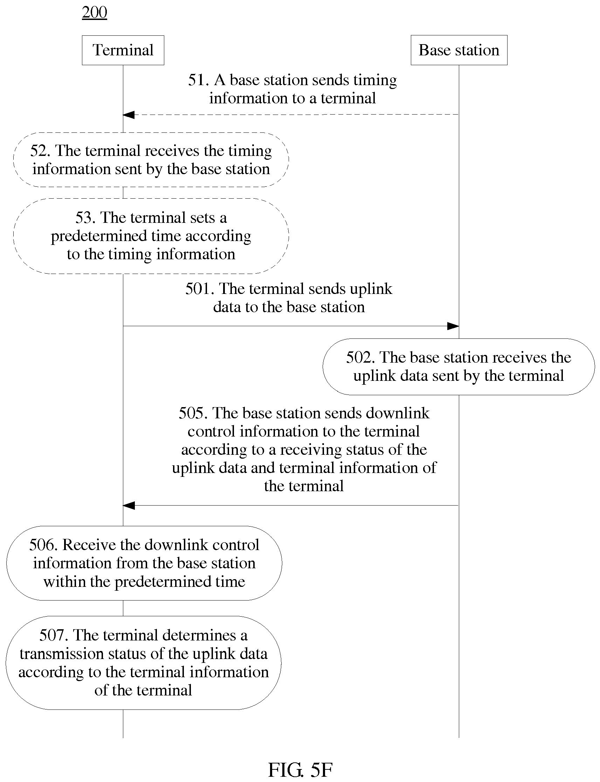

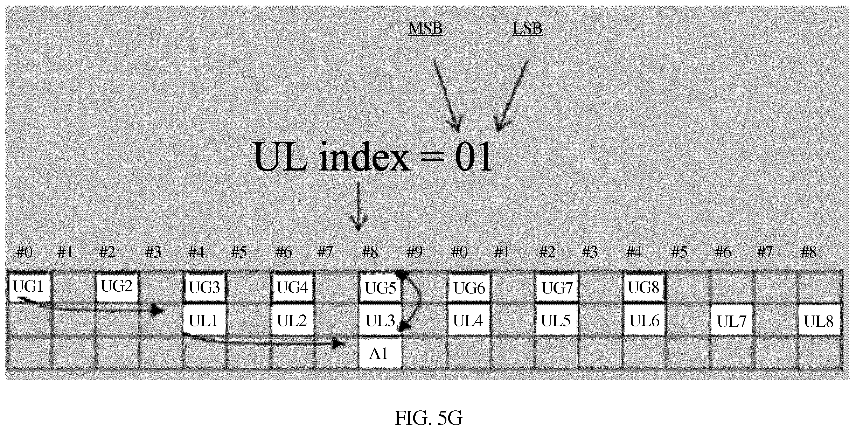

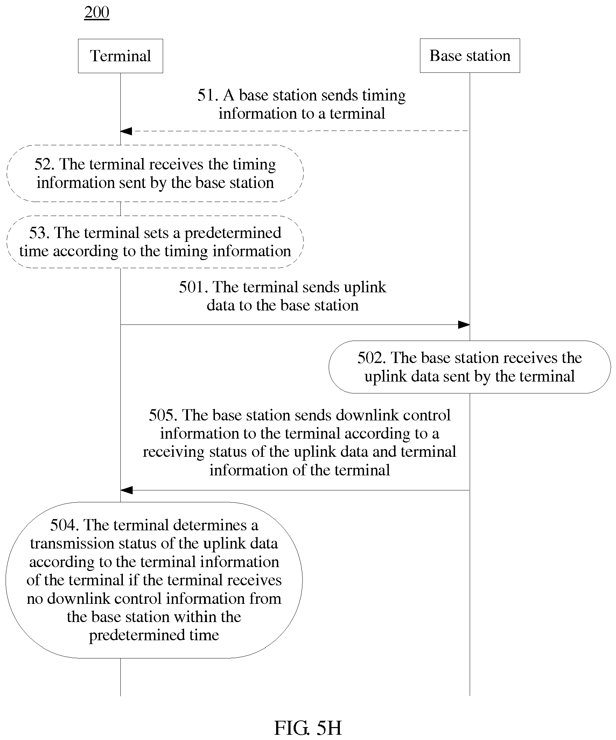

Optionally, in an embodiment of the present invention, as shown in FIG. 5, the method 400 may further include the following step:
S430. Send timing information to the terminal.

The timing information is used to determine a predetermined time, and the predetermined time is used by the terminal to determine, when no transmission state feedback information is received from the base station within the predetermined time, that the transmission status of the uplink MTC data is the second transmission state. Optionally, the timing information is sent to the terminal by using a downlink control channel. The downlink control channel is an MTC physical downlink control channel.

Optionally, the base station may send the transmission state feedback information (ACK/NACK) based on a time window or a timer, so as to ensure that when the base station sends the transmission state feedback information, the terminal can receive the transmission state feedback information from the base station within the predetermined time. That is, when needing to send the transmission state feedback information, the base station needs to send the information within a specific time.

Optionally, in an embodiment of the present invention, the base station sends the timing information to the terminal by using the M-PDCCH. For example, the base station may indicate the timing information when performing scheduling by using the M-PDCCH.

Optionally, in an embodiment of the present invention, the base station sends the first transmission state feedback information to the terminal by using the M-PDCCH.

It should be understood that in the foregoing embodiment of the present invention, interaction between the base station and the terminal, related features and functions, and the like that are described on a terminal side are corresponding to those described on a base station side. For brevity, details are not described herein again.

In addition, to determine an uplink transmission status in more MTC scenarios, referring to FIG. 5A to FIG. 5H, according to an information transmission method 200 in embodiments of the present invention, the transmission status can be determined when no downlink control information is received from a base station, or the transmission status can be determined when uplink index indication information that is corresponding to the MTC data and included in received downlink control information indicates zero. The following provides a detailed description with reference to the accompanying drawings by using merely an application in an LTE network as an example. However, this does not constitute any limitation on an application of the embodiments of the present invention.

FIG. 5A shows an information transmission method 200 according to an embodiment of the present invention. The method 200 is applied to a terminal, and includes the following steps:
51A. The terminal sends uplink data to a base station.

The uplink data may be machine type communication uplink data, that is, uplink data sent by a terminal that has an MTC function.

52A. When a first condition or a second condition is met, the terminal determines a transmission status of the uplink data according to terminal information of the terminal, where the first condition includes: the terminal receives downlink control information from the base station within a predetermined time, where the downlink control information includes uplink index indication information corresponding to the uplink data, and the uplink index indication information indicates zero; and the second condition includes: the terminal receives no downlink control information from the base station within a predetermined time.

The terminal information includes at least one of the following: type information of the terminal or coverage enhancement information of the terminal. The transmission status includes "transmission succeeds" or "transmission fails".

Based on the information transmission method shown in FIG. 5A, the transmission status of the MTC data is determined according to the terminal information, so that the transmission status can be determined when no downlink control information is received from the base station, or the transmission status can be determined when the uplink index indication information that is corresponding to the MTC data and included in the received downlink control information indicates zero.

FIG. 5B shows another information transmission method 200 according to an embodiment of the present invention. The method 200 is applied to a base station, and includes the following steps:
5IB. The base station receives uplink data sent by a terminal.

The uplink data may be machine type communication uplink data, that is, uplink data sent by a terminal that has an MTC function.

52B. The base station does not send downlink control information to the terminal or sends downlink control information to the terminal, according to a receiving status of the uplink data and terminal information of the terminal, where the downlink control information includes uplink index indication information corresponding to the uplink data, and the uplink index indication information indicates zero.

The terminal information includes at least one of the following: type information of the terminal or coverage enhancement information of the terminal. The receiving status includes "receiving succeeds" or "receiving fails".

Based on the information transmission method shown in FIG. 5B, a transmission status of the MTC data is determined according to the terminal information, so that the transmission status can be determined when no downlink control information is received from the base station, or the transmission status can be determined when the uplink index indication information that is corresponding to the MTC data and included in the received downlink control information indicates zero.

FIG. 5C shows an information transmission method 200 according to an embodiment of the present invention. The method 200 includes the following steps.

501. A terminal sends uplink data to a base station.

The uplink data may be machine type communication uplink data, that is, uplink data sent by a terminal that has an MTC function.

502. The base station receives the uplink data sent by the terminal.

503. The base station does not send downlink control information to the terminal according to a receiving status of the uplink data and terminal information of the terminal.

The "skipping sending downlink control information to the terminal" in 503 may be understood as prohibiting the base station from sending the downlink control information to the terminal, or may be understood as skipping processing of generating the downlink control information. This is not specifically limited in this embodiment of the present invention.

The terminal information includes at least one of the following: type (terminal category) information of the terminal or coverage enhancement information of the terminal.

The coverage enhancement information may include information about a capability (terminal capability) of the terminal to support coverage enhancement and information about a repetition level, a coverage enhancement level, or a coverage enhancement mode (repetition level/coverage enhancement level/coverage enhancement mode) of the terminal.

The information about a capability of the terminal to support coverage enhancement is inherent information of the terminal, for example, may include information about a capability of whether to support a particular coverage enhancement mode, and may be reported by the terminal to the base station.

The information about a repetition level, a coverage enhancement level, or a coverage enhancement mode of the terminal is information that can describe a behavior that can be implemented by the terminal and a current coverage enhancement requirement of the terminal, and may be configured by the base station for the terminal or determined according to a predetermined rule.

The type information of the terminal is inherent information of the terminal. For example, the terminal may be a terminal of a type defined in a standard. For example, the terminal may be of a type of supporting a narrowband operation or a type of not supporting a narrowband operation. The type information of the terminal may be reported by the terminal to the base station.

When the information about a capability of the terminal to support coverage enhancement and the type information of the terminal are reported by the terminal to the base station, optionally, an implementation of this embodiment of the present invention is as follows: The capability information and the type information are separately reported by using different parameters. For example, a terminal that supports a narrowband operation may be defined as a terminal of a new type, and the new type is reported to the base station by using at least one bit. For the capability to support coverage enhancement, an individual capability information significant bit may be defined, so as to report the capability to the base station by using at least two bits that may respectively indicate whether coverage enhancement modes A and B are supported.

Preferably, another implementation of this embodiment of the present invention is as follows: The type information of the terminal (for example, whether a narrowband operation is supported) and the information about a capability of the terminal to support coverage enhancement (for example, whether coverage enhancement modes A and B are supported) are reported in a joint indication manner by using a significant bit of a same parameter. In this way, reporting can be implemented by using at least two bits, thereby saving resources.

Specifically, two capability reporting significant bits may be defined to jointly indicate whether the narrowband operation is supported and whether the coverage enhancement modes A and B are supported. The following is merely an example for description.

For example,
00 indicates that the narrowband operation and the coverage enhancement are not supported; or
01 indicates that the narrowband operation is supported and that the coverage enhancement is not supported; or
10 indicates that both the narrowband operation and the coverage enhancement mode A are supported; or
11 indicates that both the narrowband operation and the coverage enhancement mode B are supported.

In the joint indication manner, a new terminal type does not need to be defined, so that impact of defining the new terminal type on an existing technical specification is reduced. In addition, a terminal that supports only a narrowband operation can better simulate a behavior of a low-cost narrowband terminal for MTC transmission. Further, by defining, for a terminal of normal complexity, an information significant bit that supports the narrowband operation, when subsequently initializing random access of the terminal, the base station may configure or grant, to the terminal of normal complexity, a capability to use a dedicated PRACH resource for the low-cost terminal. When there may be no low-cost terminal that accesses a network, the network does not need to reserve a corresponding resource, so that network resources can be fully used.

The receiving status includes "receiving succeeds" or "receiving fails".

That the base station does not send downlink control information to the terminal according to a receiving status of the uplink data and terminal information of the terminal may specifically include:
skipping sending the downlink control information to the terminal when the receiving status includes "receiving succeeds" and when the terminal meets at least one of the following conditions, where
the conditions include:
   the terminal is a terminal that supports a narrowband capability;
   the terminal has a coverage enhancement capability;
   the terminal runs in a particular coverage enhancement mode; and
   the terminal runs at a coverage enhancement level that meets a preset condition; or
   skipping sending the downlink control information to the terminal when the receiving status includes "receiving fails" and when the terminal meets at least one of the following conditions, where
   the conditions include:
      the terminal is a terminal that supports a narrowband capability;
      the terminal has a coverage enhancement capability;
      the terminal runs in a particular coverage enhancement mode; and
      the terminal runs at a coverage enhancement level that meets a preset condition.

504. The terminal determines a transmission status of the uplink data according to the terminal information of the terminal if the terminal receives no downlink control information from the base station within a predetermined time.

A meaning of the downlink control information is the same as that of DCI specified in an existing protocol.

After sending an initial uplink PUSCH, the terminal determines a location of a start transmission subframe for a corresponding downlink control channel according to a synchronous timing relationship, a quantity and a location of an available downlink subframe, and a start monitor subframe for the downlink control channel.

According to a synchronous rule, after sending the PUSCH, the terminal starts, at the determined location of the start transmission subframe, to monitor the downlink control channel that carries the DCI.

There are two implementations of determining the transmission status of the uplink data according to the terminal information of the terminal if the terminal receives no downlink control information from the base station within the predetermined time.

First, when meeting at least one of the following conditions, the terminal determines that the transmission status of the uplink data is "transmission succeeds".

The conditions include:
the terminal is a terminal that supports a narrowband capability;
the terminal has a coverage enhancement capability;
the terminal runs in a particular coverage enhancement mode; and
the terminal runs at a coverage enhancement level that meets a preset condition.

Second, when meeting at least one of the following conditions, the terminal determines that the transmission status of the uplink data is "transmission fails".

The conditions include:
the terminal is a terminal that supports a narrowband capability;
the terminal has a coverage enhancement capability;
the terminal runs in a particular coverage enhancement mode; and
the terminal runs at a coverage enhancement level that meets a preset condition.

Optionally, after determining that the transmission status of the uplink data is "transmission succeeds", the terminal may send a new piece of uplink data after the predetermined time. After determining that the transmission status of the uplink data is "transmission fails", the terminal may retransmit the uplink data after the predetermined time.

Specifically, the predetermined time may be determined according to information about an unavailable downlink transmission subframe, a start subframe of downlink control channel search space, and one or more of the following parameters:
a quantity of repetitions of the downlink control channel, the coverage enhancement level of the terminal, a quantity of repetitions of a downlink control channel for scheduling a RAR message, a quantity of repetitions of a RAR message, or a quantity of repetitions that is of a control channel for scheduling a msg 3 and that is indicated by a UL grant in a RAR message.

The information about the unavailable downlink subframe includes a location and a quantity of the unavailable downlink subframe.

In this embodiment of the present invention, the predetermined time may be indicated by the base station, or may be preconfigured. For example, referring to FIG. 5D, in an implementation of this embodiment of the present invention, the method further includes the following steps.

51. The base station sends timing information to the terminal.

The timing information is used to indicate a quantity of repetitions of the downlink control information.

Optionally, the base station sends the timing information to the terminal by using information about an unavailable downlink transmission subframe and a start subframe of downlink control channel search space and in at least one of the following manners.

The manners include:
a downlink control channel for scheduling unicast uplink data transmission;
a particular coverage enhancement mode in which the terminal runs and that is configured by the base station;
a coverage enhancement level at which the terminal runs and that is indicated by the base station;
a quantity of repetitions of a downlink control channel for scheduling a RAR message;
a quantity of repetitions of a RAR message; and
a quantity of repetitions that is of a downlink control channel for scheduling a msg 3 and that is indicated by a UL grant in a RAR message.

52. The terminal receives the timing information sent by the base station.

53. The terminal sets the predetermined time according to the timing information.

Optionally, the predetermined time may be duration required for a quantity of repetitions of a corresponding downlink control channel that may be received by the terminal. A transmission delay (such as 3 ms) of the downlink control channel may be not included in the predetermined time. For the MTC terminal, there may be a subframe that cannot be used for downlink transmission, for example, an uplink subframe in a TDD transmission mode and a subframe that is preconfigured by the base station or specified according to a predetermined rule and that cannot be used for transmitting the downlink control channel. For these subframes, the terminal may determine the predetermined time according to the predetermined rule. Specifically, if the quantity of repetitions of the downlink control channel is R, the quantity R of repetitions of the downlink control channel is sent by the base station to the terminal when the base station schedules, by using the downlink control channel, the terminal to send uplink data. Starting from a subframe n that is after the transmission delay of the downlink control channel, the terminal monitors and calculates duration of corresponding downlink control information. If there are M unavailable subframes in the subframe n and the subsequent R consecutive subframes, the terminal determines that the predetermined time is R+M; or if there is no unavailable subframe, determines that the predetermined time is R.

Optionally, the predetermined time may be understood as a quantity of repetitions (that is, a quantity of retransmissions) of a corresponding downlink control channel that may be received by the terminal. For example, a quantity of repetitions of downlink control information is recorded on the terminal. When the quantity of repetitions reaches a value, it may be considered that the predetermined time arrives.

Optionally, the predetermined time may be understood as a time window including a start subframe of the predetermined time and an end subframe of the predetermined time. The start subframe of the predetermined time is determined according to a HARQ process timing relationship rule and/or a determined transmission subframe for a downlink control channel. A location of the end subframe is determined according to a quantity of repetitions of the control channel and a quantity of unavailable downlink subframes. As shown in FIG. 5E, FIG. 5E shows a process in which a terminal in a coverage enhancement mode A transmits a PUSCH and receives downlink control information from a base station.

As shown in FIG. 5E, UG identifies a UL grant to schedule data, and A indicates downlink control information sent by the base station after receiving uplink data sent by the terminal. The UL grant and the downlink control information may be carried by using a same DCI message.

A start transmission subframe for the downlink control information A may not be continuously sent, but there is a determined start transmission subframe, a transmission time interval, and a period.

The terminal determines, according to a determined HARQ timing relationship, that the start transmission subframe for monitoring the downlink control information A has the following two possible forms:
a subframe #2 and a subframe #3, that is, a synchronous HARQ timing relationship, where according to a transmission delay, the terminal starts to monitor the downlink control information in a fourth subframe (#8) that is after sending of a PUSCH UL1 ends; or
a subframe #0 and a subframe #1, where because a subframe #2 and a subframe #3 are configured as a transmission time interval for the downlink control channel, A corresponding to a UL1 starts to be transmitted after sending of scheduling information of all HARQ processes ends. It is assumed that there are four uplink HARQ processes in FIG. 5C.

The end subframe of the predetermined time may be determined according to a quantity R of repetitions of a subframe for a control channel and a quantity M of unavailable downlink subframes in R consecutive subframes that are after the determined start subframe. For example, in FIG. 5C, the start subframe is #2, the quantity R of repetitions of the subframe is 2, and the subframe #3 is an unavailable subframe. In this case, the location of the end subframe of the predetermined time is #4.

Certainly, it may be understood that the foregoing manner in which the terminal determines the predetermined time is also applicable to the information transmission method 100 shown in FIG. 1, FIG. 2, and FIG. 4 in the first aspect.

According to the method shown in FIG. 5C, after receiving the machine type communication uplink data sent by the terminal, the base station does not send the downlink control information to the terminal according to the receiving status of the uplink data and the terminal information of the terminal, and the terminal may determine the transmission status of the uplink data according to the terminal information of the terminal if the terminal receives no downlink control information from the base station within the predetermined time, so that the transmission status of the uplink data can be determined when the terminal receives no downlink control information from the base station.

FIG. 5F shows another information transmission method 200 according to an embodiment of the present invention. Compared with the information transmission method shown in FIG. 5C, step 503 is replaced with step 505, and step 504 is replaced with step 506 and step 507, mainly. Only a difference is described in detail herein. Referring to FIG. 5F, the method includes the following steps.

501. A terminal sends uplink data to a base station.

502. The base station receives the uplink data sent by the terminal.

505. The base station sends downlink control information to the terminal according to a receiving status of the uplink data and terminal information of the terminal, where the downlink control information includes uplink index indication information corresponding to the uplink data, and the uplink index indication information indicates zero.

The downlink control information may include at least one piece of uplink index indication information, or may preferably include a plurality of pieces of uplink index indication information. Each piece of uplink index indication information is corresponding to one piece of uplink data.

In this embodiment of the present invention, that the downlink control information includes two pieces of uplink index indication information is merely used as an example for description. However, this does not constitute any limitation.

For example, the downlink control information in this embodiment of the present invention includes an uplink index (UL index) that may be, for example, two bits. Merely for example, a leftmost bit may be referred to as a most significant bit MSB (Most Significant Bit), and a rightmost bit may be referred to as a least significant bit LSB (Least Significant Bit).

Each of the two bits may indicate 1 or 0. Each bit is corresponding to one piece of uplink data.

For example, an implementation is as follows: The MSB may be corresponding to a PUSCH HARQ process that is sent earlier in a time domain, and the LSB may be corresponding to a PUSCH HARQ process that is sent later in the time domain.

On the contrary, another implementation is as follows: The MSB may be corresponding to a PUSCH HARQ process that is sent later in a time domain, and the LSB may be corresponding to a PUSCH HARQ process that is sent earlier in the time domain.

When a piece of uplink index indication information indicates 0, it may indicate that a transmission status of corresponding uplink data is "transmission succeeds". Alternatively, when a piece of uplink index indication information indicates 0, it may indicate that a transmission status of corresponding uplink data is "transmission fails".

When a piece of uplink index indication information indicates 1, an indication function of the uplink index indication information may be the same as that in an existing specification. For example, the uplink index indication information may be used to indicate a subframe location at which uplink data corresponding to the uplink index indication information is sent.

For example, if the MSB = 1, it indicates that the terminal sends a PUSCH in a subframe n+k. If the LSB = 1, it indicates that the terminal sends a PUSCH in a subframe n+7. If both the MSB and the LSB are 1, it indicates that the terminal sends a PUSCH in each of a subframe n+k and a subframe n+7.

In this way, at least one piece of uplink index indication information is configured in the downlink control information, and each piece of uplink index indication information is corresponding to one piece of uplink data, so that one piece of downlink control information can indicate transmission statuses of different uplink data, to save transmission resources. For example, for a TDD configuration 0, this embodiment of the present invention is especially applicable when a quantity of uplink subframes is greater than that of downlink subframes. Certainly, for FDD or another TDD configuration, this embodiment of the present invention is also applicable, and not limited thereto.

506. The terminal receives the downlink control information from the base station within a predetermined time, where the downlink control information includes the uplink index indication information corresponding to the uplink data, and the uplink index indication information indicates zero.

507. The terminal determines a transmission status of the uplink data according to the terminal information of the terminal.

There are two implementations of determining the transmission status of the uplink data according to the terminal information of the terminal.

First, when meeting at least one of the following conditions, the terminal determines that the transmission status of the uplink data is "transmission succeeds".

The conditions include:
the terminal is a terminal that supports a narrowband capability;
the terminal has a coverage enhancement capability;
the terminal runs in a particular coverage enhancement mode; and
the terminal runs at a coverage enhancement level that meets a preset condition.

Second, when meeting at least one of the following conditions, the terminal determines that the transmission status of the uplink data is "transmission fails".

The conditions include:
the terminal is a terminal that supports a narrowband capability;
the terminal has a coverage enhancement capability;
the terminal runs in a particular coverage enhancement mode; and
the terminal runs at a coverage enhancement level that meets a preset condition.

The following provides a detailed description of merely the first implementation with reference to a process shown in FIG. 5G. For the second implementation, a principle and a process of the second implementation are similar to those of the first implementation, and details are not repeatedly described in this embodiment of the present invention.

Referring to FIG. 5G, it is assumed that an MSB is corresponding to a PUSCH HARQ process that is sent earlier, and an LSB is corresponding to a PUSCH HARQ process that is sent later. That is, the MSB is corresponding to a HARQ process #1, and the LSB is corresponding to a HARQ process #5. In addition, if any significant bit indicates 0, the terminal considers that a transmission status of a PUSCH is an ACK. It should be understood that DCI for transmitting and scheduling data and DCI for transmitting feedback information are a same DCI message. In this embodiment of the present invention, for convenience of description, an M-PDCCH for scheduling data and an M-PDCCH for transmitting feedback information are used to indicate different implementation functions.

Because the DCI is the same, there is an NDI that is in the DCI and that indicates initial transmission or retransmission in a transmission status. The two PUSCH processes are corresponding to the same NDI, transmission of the PUSCH HARQ #1 succeeds, and a subsequent PUSCH does not need to be sent. For the HARQ #5, new data needs to be transmitted. Therefore, in the DCI message, the MSB in the UL index indicates 0. The terminal receives the DCI message within a predetermined time, and determines, according to an indication of the MSB, that a transmission status of a PUSCH transmitted corresponding to the earlier HARQ process, that is, a UL1 process, is an ACK.

According to the method shown in FIG. 5F, after receiving the machine type communication uplink data sent by the terminal, the base station sends the downlink control information to the terminal according to the receiving status of the uplink data and the terminal information of the terminal. The downlink control information includes the uplink index indication information corresponding to the uplink data. The uplink index indication information indicates zero. The terminal receives the downlink control information from the base station within the predetermined time, and the downlink control information includes the uplink index indication information corresponding to the uplink data. When the uplink index indication information indicates zero, the terminal may determine the transmission status of the uplink data according to the terminal information of the terminal. Therefore, the transmission status can be determined when the uplink index indication information that is corresponding to the MTC data and included in the received downlink control information indicates zero. In addition, further, because different MTC uplink data is corresponding to different uplink index indication information, one piece of downlink control information may be used to indicate transmission statuses of the different uplink data, so as to save transmission resources.

FIG. 5H shows another information transmission method 200 according to an embodiment of the present invention. Compared with the information transmission method shown in FIG. 5F, step 506 and step 507 are replaced with step 505, mainly. The method is used to determine a transmission status of uplink data when a base station sends downlink control information but a terminal receives no downlink control information. Herein, only a difference is described in detail. Referring to FIG. 5H, the method includes the following steps.

501. A terminal sends uplink data to a base station.

502. The base station receives the uplink data sent by the terminal.

505. The base station sends downlink control information to the terminal according to a receiving status of the uplink data and terminal information of the terminal, where the downlink control information includes uplink index indication information corresponding to the uplink data, and the uplink index indication information indicates zero.

504. The terminal determines a transmission status of the uplink data according to the terminal information of the terminal if the terminal receives no downlink control information from the base station within a predetermined time.

By using the method shown in FIG. 5H, after receiving the machine type communication uplink data sent by the terminal, the base station sends the downlink control information to the terminal according to the receiving status of the uplink data and the terminal information of the terminal. The terminal determines the transmission status of the uplink data according to the terminal information of the terminal if the terminal receives no downlink control information from the base station within the predetermined time. Therefore, the transmission status of the uplink data can be determined when the base station sends the downlink control information but the terminal receives no downlink control information.

It should be understood that sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

The foregoing describes in detail the information transmission method according to this embodiment of the present invention. The following describes a terminal and a base station according to an embodiment of the present invention.

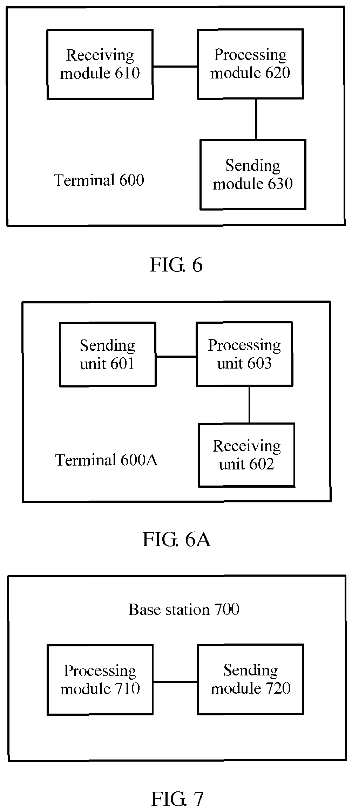

FIG. 6 is a schematic block diagram of a terminal 600 according to an embodiment of the present invention. The terminal 600 may be the terminal in the method embodiment. For content that is not described in detail herein, refer to the method embodiment. As shown in FIG. 6, the terminal 600 includes:
a sending module 630, configured to send MTC data to a base station;
a receiving module 610, configured to receive transmission state feedback information from the base station; and
a processing module 620, configured to:
   when the transmission state feedback information is received from the base station within a predetermined time, determine that a transmission status of the MTC data is a first transmission state; or when no transmission state feedback information is received from the base station within the predetermined time, determine that a transmission status of the MTC data is a second transmission state.

The first transmission state is one of "transmission succeeds" and "transmission fails", and the second transmission state is the other one of "transmission succeeds" and "transmission fails". The transmission state feedback information is one of acknowledgement ACK information and negative acknowledgement NACK information. The ACK information indicates that transmission succeeds, and the NACK information indicates that transmission fails.

Based on a solution in this embodiment of the present invention, the terminal may determine the transmission status of the uplink MTC data according to whether the transmission state feedback information is received from the base station within the predetermined time. Compared with the prior art, an amount of transmission state feedback information may be reduced, so that transmission resources can be saved.

In an optional implementation, the transmission state feedback information is the ACK information, the first transmission state is "transmission succeeds", and the second transmission state is "transmission fails". In an application scenario, the optional implementation may be applied when a failure rate of the uplink MTC data transmission is relatively high (for example, exceeds 50%). In this case, the amount of transmission state feedback information can be effectively reduced, and the transmission resources can be further saved.

In another optional implementation, the transmission state feedback information is the NACK information, the first transmission state is "transmission fails", and the second transmission state is "transmission succeeds". The optional implementation is particularly applicable when a success rate of the uplink MTC data transmission is relatively high (for example, exceeds 50%).

In an application scenario, the optional implementation may be applied when the success rate of the uplink MTC data transmission is relatively high (for example, exceeds 50%). In this case, the amount of transmission state feedback information can be effectively reduced, and the transmission resources can be further saved.

Based on the optional implementation, in another application scenario, the NACK information is included in a downlink control channel, the downlink control channel further includes retransmission scheduling information, and the retransmission scheduling information is scheduling information used to instruct to retransmit the MTC data.

The receiving module is specifically configured to receive the NACK information transmitted on the downlink control channel. The downlink control channel further includes the retransmission scheduling information, and the retransmission scheduling information is scheduling information used to instruct to retransmit the MTC data.

In this case, because the transmission fails, the terminal needs to retransmit the uplink MTC data. Configuration information such as a resource location for retransmitting the uplink MTC data may be predefined. Alternatively, the base station sends the retransmission scheduling information on the downlink control channel, to indicate the configuration information. In this case, the NACK information is also transmitted by using the downlink control channel, so that resources can be multiplexed to save transmission resources. In particular, the optional implementation is especially applicable when the MTC data is the last piece of MTC data.

In an optional implementation, the receiving module is further configured to receive timing information sent by the base station.

The processing module is further configured to determine the predetermined time according to the timing information.

On that basis, optionally, the receiving module is specifically configured to receive the timing information transmitted on a downlink control channel. The downlink control channel is an MTC physical downlink control channel.

In addition, after the transmission status of the uplink MTC data is determined, a corresponding operation may be performed for the transmission status. An example is used in the following description.

When the receiving module 610 receives the first transmission state feedback information from the base station within the predetermined time, a transmission operation corresponding to the first transmission state is performed. When the receiving module 610 receives no transmission state feedback information from the base station within the predetermined time, a transmission operation corresponding to the second transmission state is performed. The first transmission state is one of "transmission succeeds" and "transmission fails", and the second transmission state is the other one of "transmission succeeds" and "transmission fails". The first transmission state feedback information is one of acknowledgement ACK information and negative acknowledgement NACK information, the first transmission state feedback information is corresponding to the first transmission state, and the transmission state feedback information includes the ACK information and/or the NACK information.

The terminal according to this embodiment of the present invention performs, when receiving the first transmission state feedback information from the base station within the predetermined time, the transmission operation corresponding to the first transmission state, or performs, when receiving no transmission state feedback information within the predetermined time, the transmission operation corresponding to the second transmission state, so that the amount of transmission state feedback information can be reduced, and the transmission resources can be accordingly saved.

Optionally, in an embodiment of the present invention, the sending module 630 is configured to:
transmit a next piece of uplink data when the receiving module 610 receives the ACK information from the base station within the predetermined time; or retransmit previously sent uplink data when the receiving module 610 receives no ACK information from the base station within the predetermined time.

Optionally, in another embodiment of the present invention, the sending module 630 is configured to:
retransmit previously sent uplink data when the receiving module 610 receives the NACK information from the base station within the predetermined time; or transmit a next piece of uplink data when the receiving module 610 receives no NACK information from the base station within the predetermined time.

Optionally, in another embodiment of the present invention, the sending module 630 is configured to:
transmit a next piece of uplink data when the receiving module 610 receives the ACK information from the base station within the predetermined time and when a previous piece of sent uplink data is not the last piece of uplink data; or retransmit previously sent uplink data when the receiving module 610 receives no ACK information from the base station within the predetermined time and when the previously sent uplink data is not the last piece of uplink data; or
retransmit previously sent uplink data when the receiving module 610 receives the NACK information from the base station within the predetermined time and when the previously sent uplink data is the last piece of uplink data; or when the receiving module 610 receives no NACK information from the base station within the predetermined time and when a previous piece of sent uplink data is the last piece of uplink data, determine that a transmission status of the previous piece of uplink data is "transmission succeeds".

Optionally, in an embodiment of the present invention, the receiving module 610 is further configured to receive timing information sent by the base station.

The terminal further includes:
a determining module, configured to determine the predetermined time according to the timing information.

Optionally, in another embodiment of the present invention, the receiving module 610 is specifically configured to receive the timing information sent by the base station by using the M-PDCCH.

Optionally, in another embodiment of the present invention, the predetermined time is associated with a quantity of repetitions or a coverage enhancement level of an uplink data channel.

Optionally, in another embodiment of the present invention, the first transmission state feedback information is sent by the base station by using an M-PDCCH.

The terminal 600 according to this embodiment of the present invention may be corresponding to the terminal in the information transmission methods in the embodiments of the present invention, and the foregoing and other operations and/or functions of the modules in the terminal 600 are separately used to implement corresponding procedures of the methods. For brevity, details are not described herein again.

FIG. 6A is a schematic block diagram of a terminal 600A according to an embodiment 200 of the present invention. The terminal 600 may perform steps of the terminal in the method embodiment 200. For content that is not described in detail herein, refer to the method embodiment. As shown in FIG. 6A, the terminal 600A includes:
a sending unit 601, a receiving unit 602, and a processing unit 603.

The sending unit 601 is configured to send machine type communication uplink data to a base station.

The processing unit 603 is configured to determine a transmission status of the uplink data according to terminal information of the terminal when a first condition or a second condition is met.

The first condition includes: the receiving unit 602 receives downlink control information from the base station within a predetermined time, where the downlink control information includes uplink index indication information corresponding to the uplink data, and the uplink index indication information indicates zero.

The second condition includes: the receiving unit 602 receives no downlink control information from the base station within a predetermined time.

The terminal information includes at least one of the following: type information of the terminal or coverage enhancement information of the terminal. The transmission status includes "transmission succeeds" or "transmission fails".

Optionally, the processing unit 603 is specifically configured to: when the terminal meets at least one of the following conditions, determine that the transmission status of the uplink data is "transmission succeeds".

The conditions include:
the terminal is a terminal that supports a narrowband capability;
the terminal has a coverage enhancement capability;
the terminal runs in a particular coverage enhancement mode; and
the terminal runs at a coverage enhancement level that meets a preset condition.

Optionally, the processing unit 603 is specifically configured to: when the terminal meets at least one of the following conditions, determine that the transmission status of the uplink data is "transmission fails".

The conditions include:
the terminal is a terminal that supports a narrowband capability;
the terminal has a coverage enhancement capability;
the terminal runs in a particular coverage enhancement mode; and
the terminal runs at a coverage enhancement level that meets a preset condition.

Further, the receiving unit 602 is configured to receive timing information sent by the base station.

The processing unit is further configured to set the predetermined time according to the timing information received by the receiving unit.

Further, the receiving unit 602 is specifically configured to:
receive the timing information sent by the base station by using a downlink control channel.

In an implementation of this embodiment of the present invention, the predetermined time may be determined according to information about an unavailable downlink transmission subframe, a start subframe of downlink control channel search space, and one or more of the following parameters:
a quantity of repetitions of the downlink control channel, the coverage enhancement level of the terminal, a quantity of repetitions of a downlink control channel for scheduling a RAR message, a quantity of repetitions of a RAR message, or a quantity of repetitions that is of a control channel for scheduling a msg 3 and that is indicated by a UL grant in a RAR message.

The terminal 600A provided in this embodiment of the present invention may determine the transmission status of the MTC data according to the terminal information, so that the transmission status can be determined when no downlink control information is received from the base station, or the transmission status can be determined when the uplink index indication information that is corresponding to the MTC data and included in the received downlink control information indicates zero.

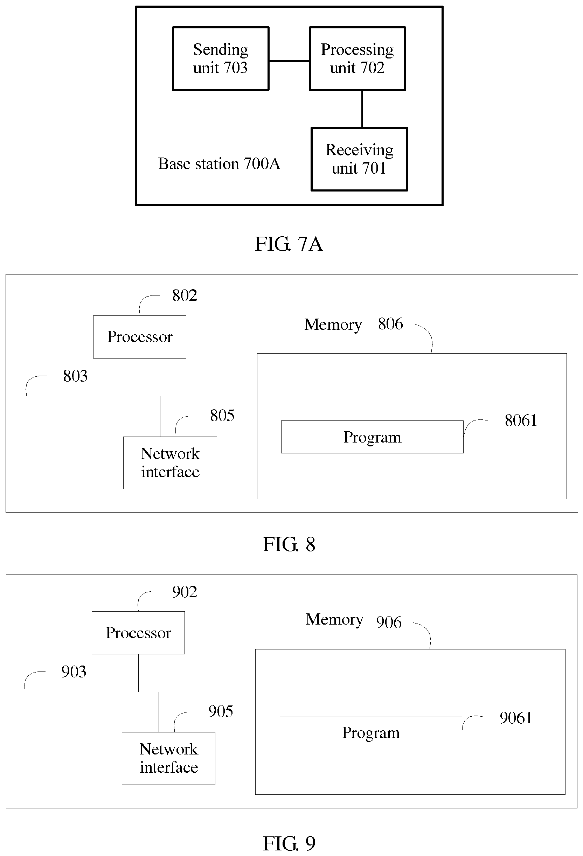

FIG. 7 is a schematic block diagram of a base station 700 according to an embodiment of the present invention. The base station 700 is applied to MTC. As shown in FIG. 7, the base station 700 includes:
a processing module 710, configured to monitor a transmission status of uplink MTC data of a terminal; and
a sending module 720, configured to: send transmission state feedback information to the terminal when the transmission status of the uplink MTC data is a first transmission state; or prohibit sending transmission state feedback information to the terminal when the transmission status of the uplink MTC data is a second transmission state.

The first transmission state is one of "transmission succeeds" and "transmission fails", and the second transmission state is the other one of "transmission succeeds" and "transmission fails". The transmission state feedback information is one of acknowledgement ACK information and negative acknowledgement NACK information. The ACK information indicates that transmission succeeds, and the NACK information indicates that transmission fails.

Based on a solution in this embodiment of the present invention, the terminal may determine the transmission status of the uplink MTC data according to whether the transmission state feedback information is received from the base station within a predetermined time. Compared with the prior art, an amount of transmission state feedback information may be reduced, so that transmission resources can be saved.

In an optional implementation, the transmission state feedback information is the ACK information, the first transmission state is "transmission succeeds", and the second transmission state is "transmission fails". In an application scenario, the optional implementation may be applied when a failure rate of the uplink MTC data transmission is relatively high (for example, exceeds 50%). In this case, the amount of transmission state feedback information can be effectively reduced, and the transmission resources can be further saved.

In another optional implementation, the transmission state feedback information is the NACK information, the first transmission state is "transmission fails", and the second transmission state is "transmission succeeds". The optional implementation is particularly applicable when a success rate of the uplink MTC data transmission is relatively high (for example, exceeds 50%).

In an application scenario, the optional implementation may be applied when the success rate of the uplink MTC data transmission is relatively high (for example, exceeds 50%). In this case, the amount of transmission state feedback information can be effectively reduced, and the transmission resources can be further saved.

Based on the optional implementation, in another application scenario, the NACK information is included in a downlink control channel, the downlink control channel further includes retransmission scheduling information, and the retransmission scheduling information is scheduling information used to instruct to retransmit the MTC data.

The sending module is specifically configured to: send the NACK information on the downlink control channel, and transmit the retransmission scheduling information on the downlink control channel. The retransmission scheduling information is scheduling information used to instruct to retransmit the MTC data.

In this case, because the transmission fails, the terminal needs to retransmit the uplink MTC data. Configuration information such as a resource location for retransmitting the uplink MTC data may be predefined. Alternatively, the base station sends the retransmission scheduling information on the downlink control channel, to indicate the configuration information. In this case, the NACK information is also transmitted by using the downlink control channel, so that resources can be multiplexed to save transmission resources. In particular, the optional implementation is especially applicable when the MTC data is the last piece of MTC data.

First transmission state feedback information is sent to the terminal when the processing module 710 determines that the transmission status of the uplink data is the first transmission state. Transmission state feedback information is not sent to the terminal when the processing module 710 determines that the transmission status of the uplink data is the second transmission state. The first transmission state is one of "transmission succeeds" and "transmission fails", and the second transmission state is the other one of "transmission succeeds" and "transmission fails". The first transmission state feedback information is one of acknowledgement ACK information and negative acknowledgement NACK information, the first transmission state feedback information is corresponding to the first transmission state, and the transmission state feedback information includes the ACK information and/or the NACK information.

The base station according to this embodiment of the present invention sends, to the terminal, only transmission state feedback information corresponding to one transmission status, so that an amount of transmission state feedback information can be reduced, and transmission resources can be accordingly saved.

Optionally, in an embodiment of the present invention, the sending module 720 is specifically configured to:
send the ACK information to the terminal when the processing module 710 determines that the transmission status of the uplink data is "transmission succeeds"; or skip sending the NACK information to the terminal when the processing module 710 determines that the transmission status of the uplink data is "transmission fails".

Optionally, in another embodiment of the present invention, the sending module 720 is specifically configured to:
send the NACK information to the terminal when the processing module 710 determines that the transmission status of the uplink data is "transmission fails"; or skip sending the ACK information to the terminal when the processing module 710 determines that the transmission status of the uplink data is "transmission succeeds".

Optionally, in another embodiment of the present invention, the sending module 720 is specifically configured to:
send the ACK information to the terminal when the processing module 710 determines that the transmission status of the uplink data is "transmission succeeds" and when the uplink data is not the last piece of uplink data; or skip sending the NACK information to the terminal when the processing module 710 determines that the transmission status of the uplink data is "transmission fails" and when the uplink data is not the last piece of uplink data; or
send the NACK information to the terminal when the processing module 710 determines that the transmission status of the uplink data is "transmission fails" and when the uplink data is the last piece of uplink data; or skip sending the ACK information to the terminal when the processing module 710 determines that the transmission status of the uplink data is "transmission succeeds" and when the uplink data is the last piece of uplink data.

Optionally, in an embodiment of the present invention, the sending module 720 is further configured to send timing information to the terminal.

The timing information is used to determine a predetermined time, and the predetermined time is used by the terminal to determine, when no transmission state feedback information is received from the base station within the predetermined time, that the transmission status of the uplink MTC data is the second transmission state.

Optionally, in an embodiment of the present invention, the sending module 720 is specifically configured to send the timing information on a downlink control channel. The downlink control channel is a machine type communication physical downlink control channel.

The base station 700 according to this embodiment of the present invention may be corresponding to the base station in the information transmission methods in the embodiments of the present invention, and the foregoing and other operations and/or functions of the modules in the base station 700 are separately used to implement corresponding procedures of the methods. For brevity, details are not described herein again.

FIG. 7A is a schematic block diagram of a base station 700A according to an embodiment 200 of the present invention. The base station 700A may perform steps of the base station in the method embodiment 200. For content that is not described in detail herein, refer to the method embodiment. As shown in FIG. 7A, the base station 700A includes:
a receiving unit 701, a processing unit 702, and a sending unit 703.

The receiving unit 701 is configured to receive machine type communication uplink data sent by a terminal.

The processing unit 702 is configured to perform either of the following steps according to terminal information of the terminal and a receiving status of receiving the uplink data by the receiving unit 701:
skipping sending downlink control information to the terminal; or sending downlink control information to the terminal by using the sending unit 702, where the downlink control information includes uplink index indication information corresponding to the uplink data, and the uplink index indication information indicates zero.

The terminal information includes at least one of the following: type information of the terminal or coverage enhancement information of the terminal. The receiving status includes "receiving succeeds" or "receiving fails".

Optionally, the processing unit 702 is specifically configured to:
perform either of the following steps when the receiving status includes "receiving succeeds" and when the terminal meets at least one of the following conditions.

The conditions include:
the terminal is a terminal that supports a narrowband capability;
the terminal has a coverage enhancement capability;
the terminal runs in a particular coverage enhancement mode; and
the terminal runs at a coverage enhancement level that meets a preset condition.

Optionally, the processing unit 702 is specifically configured to:
perform either of the following steps when the receiving status includes "receiving fails" and when the terminal meets at least one of the following conditions.

The conditions include:
the terminal is a terminal that supports a narrowband capability;
the terminal has a coverage enhancement capability;
the terminal runs in a particular coverage enhancement mode; and
the terminal runs at a coverage enhancement level that meets a preset condition.

Further, the sending unit 703 is configured to send timing information to the terminal. The timing information is used to indicate a quantity of repetitions of the downlink control information.

Optionally, the sending unit 703 is specifically configured to:
send the timing information to the terminal by using information about an unavailable downlink transmission subframe and a start subframe of downlink control channel search space and in at least one of the following manners.

The manners include:
a downlink control channel for scheduling unicast uplink data transmission;
a particular coverage enhancement mode in which the terminal runs and that is configured by the base station;
a coverage enhancement level at which the terminal runs and that is indicated by the base station;
a quantity of repetitions of a downlink control channel for scheduling a RAR message;
a quantity of repetitions of a RAR message; and
a quantity of repetitions that is of a downlink control channel for scheduling a msg 3 and that is indicated by a UL grant in a RAR message.

The base station 700A provided in this embodiment of the present invention may determine the transmission status of the MTC data according to the terminal information, so that the transmission status can be determined when no downlink control information is received from the base station, or the transmission status can be determined when the uplink index indication information that is corresponding to the MTC data and included in the received downlink control information indicates zero.

FIG. 8 shows a structure of a terminal according to still another embodiment of the present invention. The terminal includes at least one processor 802 (for example, a CPU), at least one network interface 805 or another communications interface, a memory 806, and at least one communications bus 803 that is configured to implement connection and communication between these apparatuses. The processor 802 is configured to execute an executable module stored in the memory 806, for example, a computer program. The memory 806 may include a high-speed random access memory (RAM, Random Access Memory), or may include a non-volatile memory (non-volatile memory), for example, at least one magnetic disk memory. A communication connection to at least one other network element is implemented by using the at least one network interface 805 (which may be wired or wireless).

In some implementations, the memory 806 stores a program 8061, and the processor 802 executes the program 8061, so as to perform operations of the terminal in the following embodiment shown in FIG. 2, FIG. 3, FIG. 5A, FIG. 5C, FIG. 5F, or FIG. 5H. The operations include steps S110, S120, S130, and S140, and various optional implementations, or steps 51A, 52A, 501, 504, 506, 507, and the like, and various implementations in the method embodiment 200.

An example is used in the following description.

For example, when first transmission state feedback information is received from a base station within a predetermined time, a transmission operation corresponding to a first transmission state is performed.

When no transmission state feedback information is received from the base station within the predetermined time, a transmission operation corresponding to a second transmission state is performed. The first transmission state is one of "transmission succeeds" and "transmission fails", and the second transmission state is the other one of "transmission succeeds" and "transmission fails". The first transmission state feedback information is one of ACK information and NACK information, the first transmission state feedback information is corresponding to the first transmission state, and the transmission state feedback information includes the ACK information and/or the NACK information.

Optionally, the processor 802 is specifically configured to:
transmit a next piece of uplink data when receiving the ACK information from the base station within the predetermined time; or retransmit previously sent uplink data when receiving no ACK information from the base station within the predetermined time.

Optionally, the processor 802 is specifically configured to:
retransmit previously sent uplink data when receiving the NACK information from the base station within the predetermined time; or transmit a next piece of uplink data when receiving no NACK information from the base station within the predetermined time.

Optionally, the processor 802 is specifically configured to:
transmit a next piece of uplink data when receiving the ACK information from the base station within the predetermined time and when a previous piece of sent uplink data is not the last piece of uplink data; or retransmit previously sent uplink data when receiving no ACK information from the base station within the predetermined time and when the previously sent uplink data is not the last piece of uplink data; or
retransmit previously sent uplink data when receiving the NACK information from the base station within the predetermined time and when the previously sent uplink data is the last piece of uplink data; or when receiving no NACK information from the base station within the predetermined time and when a previous piece of sent uplink data is the last piece of uplink data, determine that a transmission status of the previous piece of uplink data is "transmission succeeds".

Optionally, the processor 802 is further configured to:
receive timing information sent by the base station; and
determine the predetermined time according to the timing information.

Optionally, the processor 802 is specifically configured to receive the timing information sent by the base station by using an M-PDCCH.

Optionally, the predetermined time is associated with a quantity of repetitions or a coverage enhancement level of an uplink data channel.

Optionally, the first transmission state feedback information is sent by the base station by using an M-PDCCH.

It can be learned from the technical solution provided in this embodiment of the present invention that, in this embodiment of the present invention, the transmission operation corresponding to the first transmission state is performed when the first transmission state feedback information is received from the base station within the predetermined time, or the transmission operation corresponding to the second transmission state is performed when no transmission state feedback information is received within the predetermined time, so that an amount of transmission state feedback information can be reduced, and transmission resources can be accordingly saved.

For another example, machine type communication uplink data is sent to a base station by using the communications interface.

A transmission status of the uplink data is determined according to terminal information of the terminal when a first condition or a second condition is met.

The first condition includes: downlink control information is received from the base station within a predetermined time, where the downlink control information includes uplink index indication information corresponding to the uplink data, and the uplink index indication information indicates zero.

The second condition includes: no downlink control information is received from the base station within a predetermined time.

The terminal information includes at least one of the following: type information of the terminal or coverage enhancement information of the terminal. The transmission status includes "transmission succeeds" or "transmission fails".

Optionally, the processor 802 is specifically configured to: when the terminal meets at least one of the following conditions, determine that the transmission status of the uplink data is "transmission succeeds".

The conditions include:
the terminal is a terminal that supports a narrowband capability;
the terminal has a coverage enhancement capability;
the terminal runs in a particular coverage enhancement mode; and
the terminal runs at a coverage enhancement level that meets a preset condition.

Optionally, the processor 802 is specifically configured to: when the terminal meets at least one of the following conditions, determine that the transmission status of the uplink data is "transmission fails".

The conditions include:
the terminal is a terminal that supports a narrowband capability;
the terminal has a coverage enhancement capability;
the terminal runs in a particular coverage enhancement mode; and
the terminal runs at a coverage enhancement level that meets a preset condition.

Further, the processor 802 is specifically configured to: receive, by using the communications interface, timing information sent by the base station, and set the predetermined time according to the timing information received by the receiving unit.

Further, the processor 802 is specifically configured to:
receive, by using the communications interface, the timing information sent by the base station by using a downlink control channel.

In an implementation of this embodiment of the present invention, the predetermined time may be determined according to information about an unavailable downlink transmission subframe, a start subframe of downlink control channel search space, and one or more of the following parameters:
a quantity of repetitions of the downlink control channel, the coverage enhancement level of the terminal, a quantity of repetitions of a downlink control channel for scheduling a RAR message, a quantity of repetitions of a RAR message, or a quantity of repetitions that is of a control channel for scheduling a msg 3 and that is indicated by a UL grant in a RAR message.

Therefore, the processor 802 may determine the transmission status of the MTC data according to the terminal information, so that the transmission status can be determined when no downlink control information is received from the base station, or the transmission status can be determined when the uplink index indication information that is corresponding to the MTC data and included in the received downlink control information indicates zero.

FIG. 9 shows a structure of a base station according to still another embodiment of the present invention. The base station includes at least one processor 902 (for example, a CPU), at least one network interface 905 or another communications interface, a memory 906, and at least one communications bus 903 that is configured to implement connection and communication between these apparatuses. The processor 902 is configured to execute an executable module stored in the memory 906, for example, a computer program. The memory 906 may include a high-speed random access memory (RAM, Random Access Memory), or may include a non-volatile memory (non-volatile memory), for example, at least one magnetic disk memory. A communication connection to at least one other network element is implemented by using the at least one network interface 905 (which may be wired or wireless).

In some implementations, the memory 906 stores a program 9061, and the processor 902 executes the program 9061, so as to perform operations in the following embodiment shown in FIG. 2, FIG. 3, FIG. 5B, FIG. 5C, FIG. 5F, or FIG. 5H. The operations include steps S410, S420, and S430, and various optional implementations, or steps 51B, 52B, 502, 503, 505, and the like, and various implementations in the method embodiment 200.

An example is used in the following description.

For example, first transmission state feedback information is sent to a terminal when it is determined that a transmission status of uplink data is a first transmission state.

Transmission state feedback information is not sent to the terminal when it is determined that a transmission status of the uplink data is a second transmission state. The first transmission state is one of "transmission succeeds" and "transmission fails", and the second transmission state is the other one of "transmission succeeds" and "transmission fails". The first transmission state feedback information is one of ACK information and NACK information, the first transmission state feedback information is corresponding to the first transmission state, and the transmission state feedback information includes the ACK information and/or the NACK information.

Optionally, the processor 902 is specifically configured to:
send the ACK information to the terminal when determining that the transmission status of the uplink data is "transmission succeeds"; or skip sending the NACK information to the terminal when determining that the transmission status of the uplink data is "transmission fails".

Optionally, the processor 902 is specifically configured to:
send the NACK information to the terminal when determining that the transmission status of the uplink data is "transmission fails"; or skip sending the ACK information to the terminal when determining that the transmission status of the uplink data is "transmission succeeds".

Optionally, the processor 902 is specifically configured to:
send the ACK information to the terminal when determining that the transmission status of the uplink data is "transmission succeeds" and when the uplink data is not the last piece of uplink data; or skip sending the NACK information to the terminal when determining that the transmission status of the uplink data is "transmission fails" and when the uplink data is not the last piece of uplink data; or
send the NACK information to the terminal when determining that the transmission status of the uplink data is "transmission fails" and when the uplink data is the last piece of uplink data; or skip sending the ACK information to the terminal when determining that the transmission status of the uplink data is "transmission succeeds" and when the uplink data is the last piece of uplink data.

Optionally, the processor 902 is further configured to send timing information to the terminal. The timing information is used to determine a predetermined time, and the predetermined time is used by the terminal to perform, when no transmission state feedback information is received within the predetermined time, a transmission operation corresponding to the second transmission state.

Optionally, the processor 902 is specifically configured to send the timing information to the terminal by using an M-PDCCH.

Optionally, the processor 902 is specifically configured to send the first transmission state feedback information to the terminal by using an M-PDCCH.

It can be learned from the technical solution provided in this embodiment of the present invention that, in this embodiment of the present invention, only transmission state feedback information corresponding to one transmission status is sent to the terminal, so that an amount of transmission state feedback information can be reduced, and transmission resources can be accordingly saved.

For another example, machine type communication uplink data sent by a terminal is received by using the communications interface.

Either of the following steps is performed according to terminal information of the terminal and a receiving status of receiving the uplink data:
skipping sending downlink control information to the terminal; or sending downlink control information to the terminal by using the communications interface, where the downlink control information includes uplink index indication information corresponding to the uplink data, and the uplink index indication information indicates zero.

The terminal information includes at least one of the following: type information of the terminal or coverage enhancement information of the terminal. The receiving status includes "receiving succeeds" or "receiving fails".

Optionally, the processor 902 is specifically configured to:
perform either of the following steps when the receiving status includes "receiving succeeds" and when the terminal meets at least one of the following conditions.

The conditions include:
the terminal is a terminal that supports a narrowband capability;
the terminal has a coverage enhancement capability;
the terminal runs in a particular coverage enhancement mode; and
the terminal runs at a coverage enhancement level that meets a preset condition.

Optionally, the processor 902 is specifically configured to:
perform either of the following steps when the receiving status includes "receiving fails" and when the terminal meets at least one of the following conditions.

The conditions include:
the terminal is a terminal that supports a narrowband capability;
the terminal has a coverage enhancement capability;
the terminal runs in a particular coverage enhancement mode; and
the terminal runs at a coverage enhancement level that meets a preset condition.

Further, the processor 902 is further configured to send timing information to the terminal by using the communications interface. The timing information is used to indicate a quantity of repetitions of the downlink control information.

Optionally, the processor 902 is further configured to send the timing information to the terminal by using the communications interface by using information about an unavailable downlink transmission subframe and a start subframe of downlink control channel search space and in at least one of the following manners.

The manners include:
a downlink control channel for scheduling unicast uplink data transmission;
a particular coverage enhancement mode in which the terminal runs and that is configured by the base station;
a coverage enhancement level at which the terminal runs and that is indicated by the base station;
a quantity of repetitions of a downlink control channel for scheduling a RAR message;
a quantity of repetitions of a RAR message; and
a quantity of repetitions that is of a downlink control channel for scheduling a msg 3 and that is indicated by a UL grant in a RAR message.

In addition, an embodiment of the present invention further provides a method for scheduling or triggering, by a base station, initial transmission and retransmission of uplink data. When the base station sends downlink control information, and a terminal receives the downlink control information, a first start subframe location and a second start subframe location at which the terminal transmits uplink data in a HARQ process are determined according to content of the downlink control information and a subframe location n at which the downlink control information is transmitted. By using the method, a start subframe location for transmitting uplink data next time can be correctly determined in an MTC scenario. In addition, a same HARQ process may be scheduled at different TTIs in one scheduling, to implement a TTI bundling function. In an implementation, an embodiment of the present invention provides an uplink data scheduling method S1. The method includes the following steps.

S101. An MTC terminal receives downlink control information from a base station.

The downlink control information includes identification (HARQ process ID) information of a HARQ process and uplink index field information.

For example, the uplink index field (UL index field) information occupies two bits. The two bits include a first bit and a second bit. The first bit may be a most significant bit in an uplink index field, and the second bit may be a least significant bit in the uplink index field.

S102. The MTC terminal determines, according to a subframe location n at which the downlink control information is transmitted, identification information of the HARQ process, and the uplink index field information, a first start subframe location and a second start subframe location for transmitting uplink data corresponding to the HARQ process.

For convenience of description, the first start subframe location may be indicated as m1, and the second start subframe location may be indicated as m2. Generally, m1=n+k, and m2=n+j.

How to determine a value of k and a value of j may be as follows:

When both the first bit and the second bit indicate a same value (0 or 1), either of the following two manners may be selected.
(a1) When n=0 or 5, k is one of 4 and 7, and j is the other one of 4 and 7.
   For example, k=4, and j=7. For another example, k=7, and j=4.
(a2) When n=1 or 6, k is one of 6 and 7, and j is the other one of 6 and 7.

For example, k=6, and j=7. For another example, k=7, and j=6.

To implement the method S1, an embodiment of the present invention provides an MTC terminal including a receiving unit and a determining unit. The receiving unit is configured to implement step S101, and the determining unit is configured to implement step S102.

In another implementation, the MTC terminal may be implemented by using a processor and a transceiver. The transceiver is configured to implement step S101, and the processor is configured to implement step S102.

In another implementation, an embodiment of the present invention provides another uplink data scheduling method S2. The method includes the following steps.

S201. A base station generates downlink control information when a terminal is a machine type communication MTC terminal.

The downlink control information includes identification information of a HARQ process and uplink index field information. The uplink index field information occupies two bits. The two bits include a first bit and a second bit. The first bit may be a most significant bit in an uplink index field, and the second bit may be a least significant bit in the uplink index field.

S202. The base station sends the downlink control information to the terminal.

Referring to the method S1, the terminal may be configured to determine, according to a subframe location n at which the downlink control information is transmitted, the identification information of the HARQ process, and the uplink index field information, a first start subframe location and a second start subframe location for transmitting uplink data corresponding to the HARQ process. For a specific manner, refer to content in the method S1.

A person skilled in the art may understand that the steps in the method S2 and the steps in the method S1 may be combined. For example, S101 and S102 are performed after S202.

To implement the method S2, an embodiment of the present invention provides a base station including a generation unit and a sending unit. The generation unit is configured to implement step S201, and the sending unit is configured to implement step S202.

In another implementation, the MTC terminal may be implemented by using a processor and a transceiver. The transceiver is configured to implement step S202, and the processor is configured to implement step S201.

By using the method S1 or S2, a same HARQ process may be scheduled at two different TTIs (transmission time interval) in one scheduling in an MTC scenario, to implement a TTI bundling (TTI bundling) function.

It should be understood that specific examples in the embodiments of the present invention are merely intended to help a person skilled in the art better understand the embodiments of the present invention, but are not intended to limit the scope of the embodiments of the present invention.

It should be understood that, the term "and/or" in this embodiment of the present invention describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in a form of a software product. The computer software product is stored in a storage medium and includes several instructions for instructing a computer device (which may be a personal computer, a server, a network device, or the like) to perform all or some of the steps of the methods described in the embodiments of the present invention. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific embodiments of the present invention, but are not intended to limit the protection scope of the present invention. Any modification or replacement readily figured out by a person skilled in the art within the technical scope disclosed in the present invention shall fall within the protection scope of the present invention. Therefore, the protection scope of the present invention shall be subject to the protection scope of the claims.

## Claims

1. An uplink data scheduling method, comprising:
receiving, by a machine type communication MTC terminal, downlink control information from a base station, wherein the downlink control information comprises identification information of a HARQ process and uplink index field information, the uplink index field information occupies two bits, and the two bits comprise a first bit and a second bit; and
determining, according to a subframe location n at which the downlink control information is transmitted, the identification information of the HARQ process, and the uplink index field information, a first start subframe location and a second start subframe location for transmitting uplink data corresponding to the HARQ process.

2. The method according to claim 1, wherein the first bit is a most significant bit in an uplink index field, and the second bit is a least significant bit in the uplink index field.

3. The method according to claim 1 or 2, wherein the determining, according to a subframe location n at which the downlink control information is transmitted, the identification information of the HARQ process, and the uplink index field information, a first start subframe location and a second start subframe location for transmitting uplink data corresponding to the HARQ process comprises:
when both the first bit and the second bit indicate a first value, determining that the first start subframe location is n+k, and determining that the second start subframe location is n+j, wherein when n=0 or 5, k is one of 4 and 7, and j is the other one of 4 and 7; or when n=1 or 6, k is one of 6 and 7, and j is the other one of 6 and 7.

4. The method according to claim 3, wherein the first value is 0 or 1.

5. An uplink data scheduling method, comprising:
generating, by a base station, downlink control information when a terminal is a machine type communication MTC terminal, wherein the downlink control information comprises identification information of a HARQ process and uplink index field information, the uplink index field information occupies two bits, and the two bits comprise a first bit and a second bit; and
sending, by the base station, the downlink control information to the terminal, wherein
a subframe location n at which the downlink control information is transmitted, the identification information of the HARQ process, and the uplink index field information are used to determine a first start subframe location and a second start subframe location for transmitting uplink data corresponding to the HARQ process.

6. The method according to claim 5, wherein the first bit is a most significant bit in an uplink index field, and the second bit is a least significant bit in the uplink index field.

7. The method according to claim 5 or 6, wherein when both the first bit and the second bit indicate a first value, the first start subframe location is n+k, and the second start subframe location is n+j, wherein
when n=0 or 5, k is one of 4 and 7, and j is the other one of 4 and 7; or when n=1 or 6, k is one of 6 and 7, and j is the other one of 6 and 7.

8. The method according to claim 7, wherein the first value is 0 or 1.

9. A machine type communication MTC terminal, comprising:
a receiving unit, configured to receive downlink control information from a base station, wherein the downlink control information comprises identification information of a HARQ process and uplink index field information, the uplink index field information occupies two bits, and the two bits comprise a first bit and a second bit; and
a determining unit, configured to determine, according to a subframe location n at which the downlink control information is transmitted, the identification information of the HARQ process, and the uplink index field information, a first start subframe location and a second start subframe location for transmitting uplink data corresponding to the HARQ process.

10. The MTC terminal according to claim 9, wherein the first bit is a most significant bit in an uplink index field, and the second bit is a least significant bit in the uplink index field.

11. The MTC terminal according to claim 9 or 10, wherein the determining unit is configured to: when both the first bit and the second bit indicate a first value, determine that the first start subframe location is n+k, and determine that the second start subframe location is n+j, wherein
when n=0 or 5, k is one of 4 and 7, and j is the other one of 4 and 7; or when n=1 or 6, k is one of 6 and 7, and j is the other one of 6 and 7.

12. The MTC terminal according to claim 11, wherein the first value is 0 or 1.

13. A base station, comprising:
a generation unit, configured to generate downlink control information when a terminal is a machine type communication MTC terminal, wherein the downlink control information comprises identification information of a HARQ process and uplink index field information, the uplink index field information occupies two bits, and the two bits comprise a first bit and a second bit; and
a sending unit, configured to send the downlink control information to the terminal, wherein
a subframe location n at which the downlink control information is transmitted, the identification information of the HARQ process, and the uplink index field information are used to determine a first start subframe location and a second start subframe location for transmitting uplink data corresponding to the HARQ process.

14. The base station according to claim 13, wherein the first bit is a most significant bit in the uplink index field, and the second bit is a least significant bit in the uplink index field.

15. The base station according to claim 13 or 14, wherein when both the first bit and the second bit indicate a first value, the first start subframe location is n+k, and the second start subframe location is n+j, wherein
when n=0 or 5, k is one of 4 and 7, and j is the other one of 4 and 7; or when n=1 or 6, k is one of 6 and 7, and j is the other one of 6 and 7.

16. The base station according to claim 15, wherein the first value is 0 or 1.
